# EUROPEAN PATENT SPECIFICATION

(11) **EP 2 477 456 B1**
(45) Date of publication and mention of the grant of the patent: **06.04.2016**
(21) Application number: 11000279.7
(22) Date of filing: 14.01.2011
(51) Int. Cl.: H05B 33/08

(54) **Drive circuit for light-emitting diode array**
Steuerkreis für eine lichtemittierende Diodenanordnung
Circuit d'entraînement pour réseau de diodes électroluminescentes

(43) Date of publication of application: 18.07.2012
(73) Proprietor: Ontopx LED GmbH, 65817 Eppstein-Ehlhalten (DE)
(72) Inventor: Röer, Norbert, 9050 Appenzell-Steinegg (CH); Qiu, Weixiong, Kaiping City Guangdong Province (CN)
(74) Representative: Kruspig, Volkmar

(56) References cited:
- WO-A1-2009/136322
- WO-A1-2010/069983
- US-A1- 2010 148 673
- US-A1- 2010 289 428

## Description

### FIELD OF THE INVENTION

The invention relates to a drive circuit for driving a light-emitting diode (LED) array. The invention provides a drive circuit for driving an LED array based on an AC current supplied by an electronic ballast circuit for driving a fluorescent lighting device. The invention further relates to a LED lighting device comprising an LED array and a drive circuit and receiving an AC current from an externally housed electronic ballast circuit.

### TECHNICAL BACKGROUND

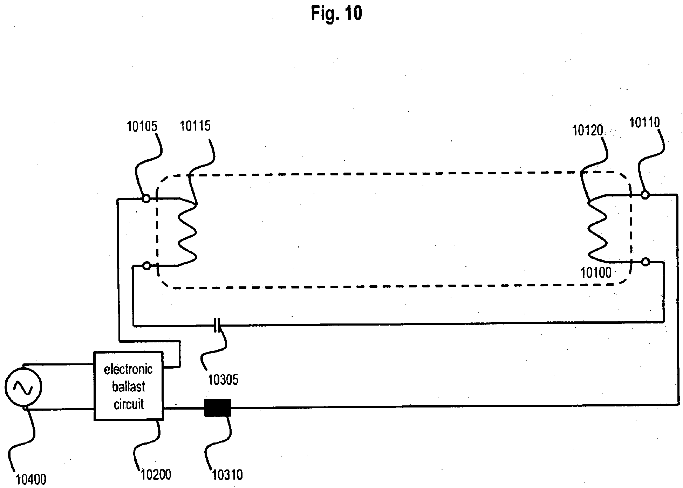

Fluorescent lighting devices, also known as fluorescent lamps, are commonly used for illumination purposes. The most frequent type of a fluorescent lighting device is a hot cathode fluorescent lamp. In a hot cathode fluorescent lamp, combined filament/cathode units 10115, 10120 provide a high temperature so that an emitter substance (normally provided as a special coating) emits electrons to the gas-fill. The filament/cathode units 10115, 10120 are connected between each of the two sets of terminals 10105, 10110 at the two sides of a tube-shaped fluorescent lighting device, as shown in e.g. Fig. 10.

The operating of a fluorescent lighting device is explained in the following three steps: first, a gas column is preheated for reducing the required ignition voltage level of the gas. Second, an ignition pulse is generated so that an arc emerges in the gas between the two electrodes. Third, the fluorescent lighting device is operated at a voltage level of an operating AC current much less than the peak voltage level of the ignition pulse.

The operating a fluorescent lighting device is controlled by a ballast circuit 10200. The ballast circuit first provides a pre-heating AC current, thereafter an ignition pulse and, upon ignition, an operating AC current. In the recent history, numerous ballast circuits were developed for improving the efficiency when providing the respective AC currents for operating a fluorescent lighting device. In this context, "electronic ballast circuits" have proven to be more energy-efficient than conventional ballast circuits when operating fluorescent lighting devices. Electronic ballast circuits usually also comply with modern safety standards in particular regarding the protection from contact with an AC current. Due to the advantages of the electronic ballast circuits compared to conventional ballast circuits, nowadays, the electronic ballast circuits are frequently used in combination with fluorescent lighting devices.

In the context of the invention, the term electronic ballast circuit refers to an electronic circuit for driving a fluorescent lighting device by controlling a frequency of a supplied AC current and its voltage level. In particular, for a fast ionization of the gas in the fluorescent lighting device, the electronic ballast circuit needs to drive an AC current at a rapidly increasing voltage level. Further, by the electronic ballast circuit adjusting the frequency of the AC current to match a high frequency value (e.g. 20 - 50 kHz) a fluorescent lighting device is prevented from flickering and from making buzzing sounds. Further, the electronic ballast circuit, in the context of the invention, is assumed not to comprise the safety function of detecting if or if not a fluorescent lighting device is defective (i.e. by measuring a level of a current (e.g. short-circuit current and non-load current) through the fluorescent lighting device some electronic ballast circuit can prevent from providing an AC current to a defective fluorescent lighting device).

For starting a fluorescent lighting device, the electronic ballast circuit 10200 generates a pre-heating AC current for preheating the filament/cathode units 10115, 10120 of the fluorescent lighting device 10100. For this purpose, the alternating frequency of a pre-heating AC current is controlled by the electronic ballast circuit to correspond to a resonance frequency of a capacitor 10305 inductor 10310 circuit as shown in e.g. Fig. 10. Accordingly, the AC current is flowing through the filament/cathode units 10115, 10120 connected to each of the two sets of terminals 10105, 10110 at each of the two sides of a tube-shaped fluorescent lighting device 10100. Electrons are emitted into the gas column by thermionic emission and form a space charge around the filament/cathode combination 10115, 10120 reducing the ignition voltage.

For an ignition pulse, the inductance 10310 is used. An instantaneous interruption of the supplied pre-heating AC current triggers the inductance 10310 to provide an ignition pulse in the magnitude of around 500V- 800V resulting in the ignition of the gas column due to an electric discharge between the two electrodes.

Once the gas column of the fluorescent lighting device is ignited, the impinging discharge keeps the cathode hot, enabling continued emission without the need for a pre-heating current. For operating the electric ballast circuit continually supplies an AC current at a voltage level of approximately 90V with an alternating frequency different from the resonance frequency of the capacitor inductor parallel circuit. Accordingly, the operating AC current is predominantly transmitted between the first set of terminals 10105 and the second set of terminal 10110 of the fluorescent lighting device 10100.

As becomes apparent from the discussion above, an electronic ballast circuit is required for operating a fluorescent lighting device. Consequently, manufacturers have adapted to this need by offering integrally manufactured fluorescent lighting device holders including the electronic ballast circuit. A fluorescent lighting device holder comprising an electronic ballast circuit reduces the mounting time for a fluorescent lighting device, namely the time required for mounting and connecting the fluorescent lighting device via a lighting device holder to an AC power outlet.

In more detail, the connections between the two sets of terminals 10105, 10110 of the fluorescent lighting device 10100 and the lighting device holder are realized via two spatially separated sockets each to be connected to one of the two sets of terminals 10105, 10110 of the fluorescent lighting device 10100. The firm connection between socket and respective set of the terminals 10105, 10110 is engageable by a rotating movement of the fluorescent lighting device in the lighting device holder. Accordingly, a fluorescent lighting device is easily replaceable in a lighting device holder, e.g. upon failure thereof, and the replacement can be handled by electrically unskilled persons.

In contrast to the replacement of the fluorescent lighting device, a replacement of an electronic ballast circuit is far more complicated and is only intended to be performed by technicians. In some cases, the integral construction of electronic ballast circuit in the lighting device holder even prevents from a manual replacement of the electronic ballast circuit. Accordingly, the removal of an electronic ballast circuit from lighting device holder is undesirable and partly not even possible.

Additionally, standards regulating the use of fluorescent lighting devices require lighting devices to be easily replaceable from the lighting device so that a replacement can easily and safely be achieved by an electrically unskilled person.

In recent years, light-emitting diodes (LED) are becoming popular for lighting appliances. For driving an LED, a forward bias DC current is provided to the light-emitting diode, enabling electrons to recombine with electron holes in the LED releasing energy in form of photons.

LEDs present many advantages over incandescent lighting devices including lower energy consumption, longer lifetime, improved robustness, smaller size, faster switching, and greater durability and reliability. Compared to fluorescent lighting devices, LEDs provide the advantages of lower energy consumption, a longer lifetime, smaller size, a faster switching and of eco-friendliness. The production of LEDs dispenses of using mercury or amalgam necessary for a fluorescent lighting device.

For increasing the luminosity of an LED lighting device, plural LEDs can be interconnected in serial and/or parallel circuits so as to form an LED array. One of many possible LED array configurations for approx. 20 to 40 Watts may include e.g. eight in parallel connected series strings each series string comprising 40 LED with an average energy consumption of 0.06 Watts per LED. Please note that the energy consumption of the LED array will of course depend on the LED type used in the LED array and the number of LEDs.

Due to the advantages of LEDs over incandescent lighting devices, LED based lighting devices have been introduced with drive circuits allowing operation from an AC current as replacement for incandescent lighting devices. However, such an LED lighting devices is prevented from being employed in a fluorescent lighting device holder because the electronic ballast circuit assuming a fluorescent lighting device would provide an ignition pulse at a very high voltage level destroying the LED drive circuit dimensioned only for the use with an operational AC current. In this respect, it is common practice for technicians to bypass/remove the electronic ballast circuit from a fluorescent lighting device holder in order to operate an LED array in a fluorescent lighting device holder. Consequently, LED based lighting devices cannot be used as an easy and safe replacement for a fluorescent lighting device.

US 2010/0289428 A1 discloses a LED array tube for retrofitting in an existing fluorescent fixture that optionally incorporates an automatic electronic safety switch to reduce the risk of electric shock to an installer in the event that a LED tube is mistakenly installed in an electrically live system. The electronic safety switch is activated by sensing voltage between one of the two bi-pin contacts at each end of the LED tube, so that the remaining bi-pin at each end of the tube conducts electrical power only after voltage sense pins have detected voltage.

### SUMMARY OF THE INVENTION

One object of the invention is to propose a drive circuit for driving an LED array so that the LED array is operable based on an AC current supplied by an electronic ballast circuit for driving a fluorescent lighting device.

Another object of the invention is to prevent a drive circuit for an LED array from providing a connection between the terminals to be connected to the first and the second socket of a lighting device holder when not being connected to the lighting device holder.

A further object of the invention is to enable a safe mounting of the drive circuit for driving an LED array preventing a technician from being exposed to an AC current, e.g. when mounting the drive circuit in the sockets of the lighting device holder.

The objects are solved by the subject matter of the independent claims. Advantageous embodiments of the invention are subject to the dependent claims.

Drive circuits are capable of driving an LED array based on an AC current. However, during startup, an electronic ballast circuit changes the drive characteristics generating AC currents with different frequencies, and generating different peak voltage levels. Accordingly, the drive circuit should be able to cope with the different drive characteristics of an electronic ballast circuit.

According to an aspect of the invention, an energy storage is provided in the drive circuit that enables at least partially storing the ignition pulse supplied by the electronic ballast circuit during startup. Accordingly, the energy of the ignition pulse can be used by the drive circuit for driving an LED array.

Another further aspect of the invention is to suggest a modification of the drive circuit to use a supplied AC current, e.g. an ignition pulse, for enabling the conversion of the supplied AC current to a DC current suitable for driving an LED array. For this purpose, a switching unit (e.g. a relay or one ore more power transistors) is implemented between the power supply sub-circuit and at least one set of the terminals to receive the supplied AC current. The AC current supplied from the electronic ballast circuit is transformed in the drive circuit for use as DC switching current. Accordingly, when the supplied AC current is received by the drive circuit, the transformed DC switching current drives the switching unit to a conducting state and enables the AC/DC conversion for driving the LED array.

A further aspect of this invention is to propose a drive circuit interrupting/preventing power supply to the power supply sub-circuit (and thus the LED array) when the drive circuit is not in an operating condition, i.e. when there is no AC current supplied via a terminal of at least one of the first and second set of terminals. For this purpose, a normally-open switching unit is implemented between the power supply sub-circuit and at least one set of terminals. If no AC current is supplied via a terminal of the first and/or second set of terminals, the switching unit rests in a disconnection state, disconnecting the power supply sub-circuit from at least one set of the terminals. A technician touching one or the other set of terminals cannot trigger the switching unit to switch to a connection state. Further, due to the lighting device holder preventing AC current from flowing until the drive circuit is properly inserted into the two sockets of the lighting device holder, the switching unit remains in a disconnection state when mounting an LED lighting device comprising the drive circuit and an LED array in the lighting device holder. Thus, during mounting the drive circuit's switching unit prevents current from flowing between the two sets of terminals of the drive circuit. Accordingly, even if one set of terminal is exposed to a high voltage, a technician accidentally touching and grounding the other set of terminals does not get an electrical shock.

One embodiment of the invention is providing a drive circuit for driving a light-emitting diode (LED) array based on an AC current supplied by an electronic ballast circuit. The electronic ballast circuit is housed in a lighting device holder for a fluorescent lighting device and is configured for driving a fluorescent lighting device. The drive circuit comprises a first set and a second set of terminals configured to respectively connect the drive circuit to the electronic ballast circuit via a first and a second socket of the lighting device holder. Furthermore, the drive circuit includes a power supply sub-circuit. The power supply sub-circuit has an AC/DC converter for converting the AC current supplied by an electronic ballast circuit to a DC current, and an energy storage unit for at least partially storing energy of the converted DC current for driving the LED array.

The drive circuit is further equipped with a safety sub-circuit which includes a switching unit for connecting the power supply sub-circuit to the first set of terminals or second set of terminals only when the AC current is received through a terminal of the first set of terminals and a terminal of the second set of terminals.

In a further embodiment, the AC current supplied from the electronic ballast circuit via a terminal of at least one of the first or second set of terminals is used by the switching unit to connect the power supply sub-circuit to the at least one of the first or second set of terminals. It should be noted that - of course - the power supply sub-circuit is hard-wired to the respective non-switched set of terminals, if the connection to only one of the first or second set of terminals is switched by the switching unit under control of the safety sub-circuit.

In a further embodiment of the invention, the safety sub-circuit is adapted to detect whether or not an AC current flows through at least one of the first set of terminals and the second set of terminals, and to connect the power supply sub-circuit to the first set of terminals and second set of terminals in response thereto. Please note that there are embodiments of the invention, where the safety sub-circuit is adapted to detect whether or not an AC current flows though one of the two sets of terminals, while there are also embodiments of the invention, where the safety sub-circuit is adapted to detect whether or not an AC current flows though both of the two sets of terminals.

In another exemplary embodiment of the invention, the drive circuit 's safety sub-circuit may further include a diode connected in parallel to the switching unit.

In a further embodiment of the invention, the drive circuit 's safety-circuit comprises a voltage regulating sub-circuit configured to provide a DC switching current at a predetermined voltage level based on the AC current received through a terminal of the first set of terminals to operate the switching unit, and a control sub-circuit configured to control the flow of the DC switching current through the switching unit in response to an AC current flowing through a terminal of the second set of terminals, to thereby control the switching operation the switching unit.

In one exemplary implementation and embodiment, the voltage regulating sub-circuit of the safety sub-circuit comprises:
- a first transformer configured to galvanically isolate the regulating sub-circuit from the first set of terminals and to transfer the AC current received through the first set of terminals,
- a first rectifier configured to rectify the transferred AC current received from the first transformer, and
- a voltage regulator configured to regulate the voltage level of the rectified AC current from the first rectifier for providing the DC switching current at the predetermined voltage level to operate the switching unit.

In this exemplary implementation the control sub-circuit of the safety sub-circuit comprises:
- a second transformer configured to galvanically isolate the regulating sub-circuit from the second set of terminals and to transfer the AC current received through the second set of terminals,
- a second rectifier configured to rectify the AC current received from the second transformer, and
- a switching control sub-circuit configured to control the flow of the DC switching current through the switching unit based on a comparison of the voltage level of the rectified AC current received from the second rectifier to a threshold voltage level.

In another exemplary implementation and embodiment, the voltage regulating sub-circuit of the safety sub-circuit comprises:
- a first transformer configured to galvanically isolate the voltage regulating sub-circuit from the first set of terminals and to reduce the voltage level of the AC current received through the first set of terminals, and
- a first rectifier configured to rectify the transferred AC current received from the first transformer and to provide the DC switching current at the predetermined voltage level to operate the switching unit.

Here, the control sub-circuit of the safety sub-circuit comprises:
- a second transformer configured to galvanically isolate the regulating sub-circuit from the second set of terminals and to transfer the AC current received through the second set of terminals,
- a second rectifier configured to rectify the AC current received from the second transformer, and
- a switching control sub-circuit configured to control the flow of the DC switching current through the switching unit based on a comparison of the voltage level of the rectified AC current received from the second rectifier to a threshold voltage level.

In a further exemplary implementation and embodiment, the voltage regulating sub-circuit of the safety sub-circuit comprises:
- a first rectifier configured to rectify the AC current received via the first set of terminals, and
- a voltage regulator configured to regulate the voltage level of the rectified AC current from the first rectifier for providing the DC switching current at the predetermined voltage level to operate the switching unit,
while the control sub-circuit of the safety sub-circuit comprises:
- a second rectifier configured to rectify the AC current received via the second set of terminals and to transfer the AC current received through the second set of terminals,
- a second voltage regulator configured to regulate the voltage level of the rectified AC current received from the second rectifier for providing a DC control current at a voltage level suitable for operating an optocoupler, and
- an optocoupler for controlling the flow of the DC switching current through the switching unit based on a comparison of the voltage level of the DC control current received from the second voltage regulator to a threshold voltage level.

In another exemplary implementation and embodiment, the voltage regulating sub-circuit of the safety sub-circuit comprises:
- a first parallel circuit including a Zener diode and a capacitor connected in parallel to the terminals of the first set of terminals, the first parallel circuit providing the DC switching current at the predetermined voltage level to operate the switching unit.

In this embodiment, the control sub-circuit included in the safety sub-circuit comprises:
- a sub-circuit including a voltage divider, a capacitor and two serially connected diodes connected to the second set of terminals, and
- an optocoupler for controlling the flow of the DC switching current through the switching unit based on a comparison of a voltage level of a DC current transferred by the sub-circuit to a threshold voltage level.

In another exemplary embodiment, the switching unit of the drive circuit includes a normally-open relay with a monostable switching behavior. Furthermore, the safety sub-circuit is configured to generate a DC switching current for operating the relay.

In another embodiment of the invention, the electronic ballast circuit provides an operating AC current at a predefined voltage level, and an ignition pulse with a peak voltage level higher than the voltage level of the operating AC current. The AC/DC converter of the drive circuit further includes a rectifier configured to rectify the ignition pulse and/or the operating AC current supplied from the electronic ballast circuit for outputting a DC current. Moreover, the energy storage unit is configured to at least partially store the energy of the rectified ignition pulse and/or the rectified operating AC current from the AC/DC converter's rectifier.

The power supply sub-circuit further includes a DC/DC converter configured to convert the stored energy of the ignition pulse and/or the stored operating AC current to a predetermined DC current or voltage level for driving the LED array. Alternatively, the power supply sub-circuit includes a series circuit including a transistor and a capacitor configured to at least partially bypass the energy of the ignition pulse and/or the energy of the operating AC current for providing a reduced ignition pulse and/or a reduced operation AC current to the third rectifier so that the DC current output by the power supply sub-circuit or the voltage level thereof corresponds to a predetermined DC current respective voltage level for driving the LED array.

Optionally, the drive circuit further includes a filter for pre-filtering the ignition pulse and/or operating AC current to be supplied to the power supply sub-circuit via at least one of the first or second set of terminals.

In another embodiment of the invention, the DC/DC converter included in the power supply sub-circuit further comprises:
- a load-circuit configured to simulate a load of a fluorescent lighting device based on a voltage/current characteristic of the fluorescent lighting device;
- a PWM-controller configured to output a duty ratio signal according to a signal output by the load-circuit indicating the simulated load, according to a counter signal and according to the DC current level outputted by the third rectifier and/or the voltage level thereof; and
- an inverter sub-circuit configured to convert the DC current received from the rectifier and/or the voltage level thereof depending on the duty ratio signal of the PWM-controller.

In another embodiment of the invention, the power supply sub-circuit of the drive circuit further comprises a controller configured to output a signal determining an amount of energy to be bypassed by a transistor of the series circuit according to the DC current/voltage level outputted by the power supply sub-circuit for controlling the transistor of the series circuit, to thereby adjust the current flowing through the drive circuit and/or the voltage level thereof to simulate a load of a fluorescent lighting device.

In a further embodiment of the invention, the power supply sub-circuit of the drive circuit further comprises a controller configured to output a signal determining an amount of energy to be bypassed by the transistor of the series circuit according to the DC current/voltage level outputted by the power supply sub-circuit for controlling the transistor of the series circuit, to thereby adjust the current flowing through the drive circuit and/or the voltage level thereof to simulate a load of a fluorescent lighting device.

Another aspect of the invention is to provide a light-emitting diode (LED) lighting device receiving an AC current from an externally housed electronic ballast circuit. The LED lighting device comprises a drive circuit according to one of th e various emboduments described herein and further an LED array connected to the power supply sub-circuit of the drive circuit.

The LED lighting device according to a, further embodiment of the invention comprises an electronic ballast circuit for replacing the externally housed electronic ballast circuit upon failure.

### BRIEF DESCRIPTION OF THE FIGURES

In the following the invention is described in more detail referring to the attached figures and drawings. Similar or corresponding details in the figures are marked with the same reference numerals.
- **Fig. 1**: schematically shows a drive circuit for driving an LED array in connection with an electronic ballast circuit according to an exemplary embodiment of the invention,
- **Fig. 2**: schematically shows another drive circuit for driving an LED array in connection with an electronic ballast circuit according to another exemplary embodiment of the invention,
- **Fig. 3**: schematically shows a safety sub-circuit according to an exemplary embodiment of the invention,
- **Fig. 4**: illustrates an exemplary circuit diagram of a drive circuit for driving an LED array according to an embodiment of the invention,
- **Fig. 5**: schematically shows another exemplary drive circuit for driving an LED array in connection with an electronic ballast circuit according to another embodiment of the invention,

- **Fig. 6**: illustrates an exemplary circuit diagram of a drive circuit for driving an LED array according to a further embodiment of the invention,
- **Fig. 7**: illustrates an exemplary circuit diagram of a drive circuit for driving an LED array according to another embodiment of the invention,
- **Fig. 8**: illustrates an exemplary circuit diagram of a drive circuit for driving an LED array according to a further embodiment of the invention,
- **Fig. 9**: illustrates an exemplary circuit diagram of a drive circuit for driving an LED array according to an embodiment of the invention, and
- **Fig**. **10**: shows an exemplary configuration of a fluorescent lighting device in connection with an electronic ballast circuit.

### DETAILED DESCRIPTION OF THE INVENTION

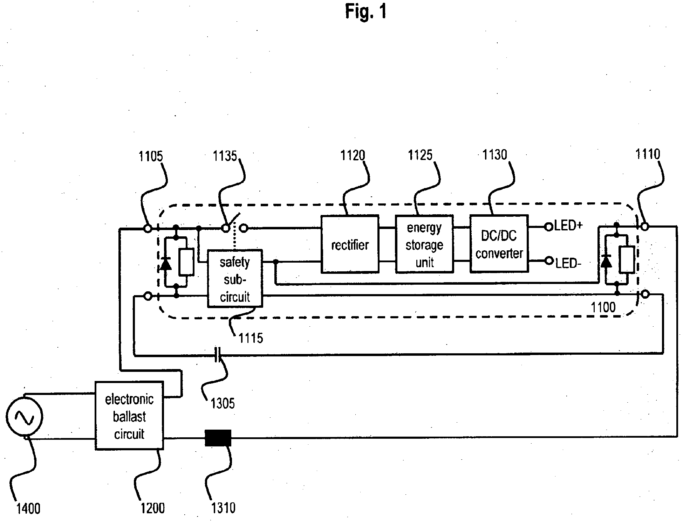

Fig. 1 shows a schematic view of a drive circuit for driving an LED array in connection with an electronic ballast circuit according to an exemplary embodiment of the invention. Drive circuit 1100 for driving an LED array is shown in connection with an electronic ballast circuit 1200. In particular, the drive circuit 1100 is connected to the electronic ballast circuit 1200 via two sets of terminals 1105 and 1110. A first set of terminals 1105 is connected to a first socket of a lighting device holder and the second set of terminals 1110 is connected to the second socket of the lighting device holder. Although not illustrated, the first and second socket of the lighting device holder are configured for receiving a fluorescent lighting device of e.g. the T5 or T8 type.

Each set of terminals 1105 and 1110 may include two terminals to be connected to each of the first and second socket of the lighting device holder. The first or second set of terminals may optionally also include an additional terminal(s) for connecting the drive circuit 1100 to an external ground voltage and/or a common potential. Further, each set of terminals 1105, 1110 may additionally include terminals for providing an externally generated dimming signal and/or for connecting an externally housed remote control sensor to the drive circuit 1100.

The drive circuit 1100 includes a power supply sub-circuit comprising an AC/DC converter and an energy storage unit 1125. The power supply sub-circuit can be connected to at least one of the terminals of each of the two sets of terminals 1105, 1110. The AC/DC converter includes rectifier 1125. The power supply sub-circuit further comprises a DC/DC converter 1130. The power supply sub-circuit is configured to convert the AC current supplied via the first and second set of terminals 1105 and 1110 for driving an LED array. Since LEDs require DC current, the power supply sub-circuit converts the supplied AC current to a DC drive current suitable for driving the LED array, i.e. provides a predetermined AC current and/or voltage level to the LED array.

Further, the energy storage unit 1125 is configured to store at least a portion of the energy of an ignition pulse to be supplied by the electronic ballast circuit 1200. Thereby, AC current to be supplied by the electronic ballast circuit 1200 during startup, e.g. a pre-heating AC current or an ignition pulse, is used for driving the LED array enabling a fast turn-on time of the LED array and high energy efficiency. As the ignition pulse is used for driving an LED array, a steady operation of the LED array is achieved, even with the electronic ballast circuit changing between the supply of pre-heating AC current, ignition pulse and operating AC current. Accordingly, the electronic storage unit prevents from flickers when driving the LED array based on an AC current from an electronic ballast circuit changing between the different driving states.

The power supply sub-circuit further includes output terminals LED+ and LED- for connecting an LED array and for outputting the converted DC current for driving the LED array. In particular, the DC/DC converter 1130 provides output terminals LED+ and LED-for outputting a predetermined DC voltage or current level to drive an LED array.

As shown in Fig. 1, the drive circuit 1100 further includes a resistor and a diode connected in parallel between the terminals of each of the two sets of terminals 1105, 1110. The parallel connection of the resistor and the diode enables the power supply sub-circuit to be supplied with AC current even when the drive device 1100 is inserted in the lighting device holder with a horizontally rotated orientation, namely when the terminals of the drive device 1100 to supply the AC current to the power supply sub-circuit are connected to passive pins in the socket of the lighting device holder connected to the capacitor 1305 and not to active pins in the socket to be driven by the electronic ballast circuit. Thus, an AC current of the electronic ballast circuit can be supplied to the power supply sub-circuit in both horizontally rotated orientations of the drive circuit when the power supply sub-circuit is connected to only one of each of the first and second sets of terminals 1105, 1110. Alternatively, a diode and a capacitor connected in parallel may be provided between the terminals of each of the two sets of terminals 1105, 1110.

Further, the drive circuit 1100 includes a safety sub-circuit 1115 connected to the terminals of each set of terminals 1105, 1110 for preventing AC current from flowing between the first and second set of terminals when the drive circuit 1100 is detached from the lighting device holder. This is achieved by the safety sub-circuit 1115 identifying an operational AC current via the terminals 1105 and 1110. In particular, the safety sub-circuit 1115 detects, if AC current is supplied via a terminal of at least one of the first and second set of terminals 1105 and 1110 to be connected to the first and second socket of the lighting device holder.

Upon startup, the electronic ballast circuit 1200 sets the frequency of the AC current to be output for driving a fluorescent lighting device or a drive circuit for a LED array corresponding to the resonance frequency of the serial circuit of the inductor 1310 and the capacitor 1305. Accordingly, high amounts of energy are circulating between the terminals of each of the two sets of terminals 1105, 1110 connected to the first and second sockets of the lighting device holder.

As a safety measure, the receiving pins in the sockets of a fluorescent lighting device holder are realized as an open connection until a set of terminals of a fluorescent lighting device or of a drive circuit 1100 is inserted into the respective socket of the lighting device holder. Accordingly, a pre-heating AC current is prevented from flowing through the circuit of inductor 1310 and capacitor 1305 until the fluorescent lighting device or the drive circuit is inserted in the lighting device holder.

Even if the fluorescent lighting device or the drive circuit 1100 is only inserted into one of the two sockets, a pre-heating AC current is prevented from flowing because the receiving pins in the socket, into which the drive device 1100 has not been inserted, form an open connection. Accordingly, also in this case a pre-heating AC current is prevented from flowing through the circuit of inductor 1310 and capacitor 1305.

However, the high voltage supplied by the electronic ballast circuit for invoking the AC pre-heating current could be considered as a threat if a drive circuit would provide a permanent connection between both sets of terminals. Under the assumption of a drive circuit providing a permanent connection between both sets of terminals, a drive circuit that was inserted only with the first set of terminals 1105 into one socket of the lighting device holder would forward a high voltage to the easily accessible terminals of the other, second set of terminals 1110. Accordingly, a technician accidentally touching and grounding the second set of terminals 1110 during mounting would be exposed to an AC current resulting in an electric shock. In this case, the AC current would be flowing between the first and second set of terminals through the drive circuit and not between the terminals of each of the first and second set of terminals.

Accordingly, by the safety sub-circuit 1115 interrupting the connection between the power supply sub-circuit and at least one of the two sets of terminals 1105 and 1110 to be connected to the first or second socket of the lighting device holder, a AC current cannot flow between the two sets of terminals 1105 and 1110 and, hence, can also not be forwarded to the easily accessible terminals of the un-connected set of terminals 1105 or 1110, namely the set of terminals which has not been inserted into a respective socket of the lighting device holder. Consequently, the safety sub-circuit 1115 prevents a technician from being exposed to an AC current, e.g. when mounting the drive circuit in the sockets of the lighting device holder.

Upon detection of the absence of an AC current supplied via a terminal of at least one of the first or second set of terminals 1105 and 1110, the safety sub-circuit 1115 is configured to interrupt the driving of the LED array by disconnecting the power supply sub-circuit from at least one set of terminals 1105 and 1110.

In the first embodiment according to Fig. 1, the drive circuit 1100 comprises a switching unit 1135 to be controlled by the safety sub-circuit 1115 for connecting/disconnecting the power supply sub-circuit from at least one set of terminals 1105, 1110, namely the first set of terminals 1105 as shown in Fig. 1.

If, for instance, the safety sub-circuit 1115 detects the absence of an AC current supplied via a terminal of at least one of the two sets of terminals 1105 or 1110, the safety sub-circuit 1115 disconnects the power supply sub-circuit from the first set of terminals 1105 in order to prevent the drive circuit 1100 from forwarding AC current between the two sets of terminals 1105, 1110.

It is important to note that the light-emitting diode (LED) lighting device comprising the drive circuit 1100 together with the LED array is configured to simulate a fluorescent lighting device, preferably a fluorescent lighting device with low power consumption Hence, the drive circuit 1100 and the connected LED array should have an overall load that corresponds to that of a typical fluorescent lighting device available in the market, or that does not cause the electronic ballast circuit 1200 to go into error mode and interrupt the power supply. Configuring the drive circuit 1100 and the LED array to have an adequate power consumption (mainly due to foreseeing a sufficient/desired number of LEDs in the LED array) allows to provide feedback to the electronic ballast circuit 1200 that indicates a lighting device being present and connected in the lighting device holder and that the electronic ballast circuit 1200 can proceed with the operating AC current, even when the drive circuit is driving an LED array.

The power consumption of a fluorescent lighting device commonly depends on its length and is in the range of 15W to 60W. Hence, the drive circuit 1100 and LED array should be configured with a corresponding power consumption (respectively to apply a load to the terminals) in this range. Please note that one can assumed that the power consumption of an LED array with a given luminance is lower than that of a fluorescent lighting device of the same luminance, so that the drive circuit (together with the LED array) may simulate a "low power" fluorescent lighting device (e.g. in the range 10 W to 30W). Of course the power consumption of the drive circuit 1100 as such should be minimal and the power consumption of the LED array is the main power sink. The power consumption of the LED array is influenced by the desired number of LEDs in the LED array, respectively the desired luminance. Hence, depending on the number of LEDs, the LED array (and drive circuit) may be configured also with power consumption in the range of 30W to 60W or even more.

Accordingly, in one exemplary embodiment of the invention, the LED array should have at least 200 LEDs at a power consumption of 0.06 Watt/LED on average, or at least 240 LEDs at a power consumption of 0.06 Watt/LED on average.

Further, experiments have shown that conventional electronic ballast circuits accept power consumption as low as 10 Watt, sometimes even 4 Watt, without going into error mode. Hence, the power consumption of the drive circuit 1100 may be as low as 10 Watt or even 4 Watt, respectively, the LED array may also have a corresponding lower number of LEDs.

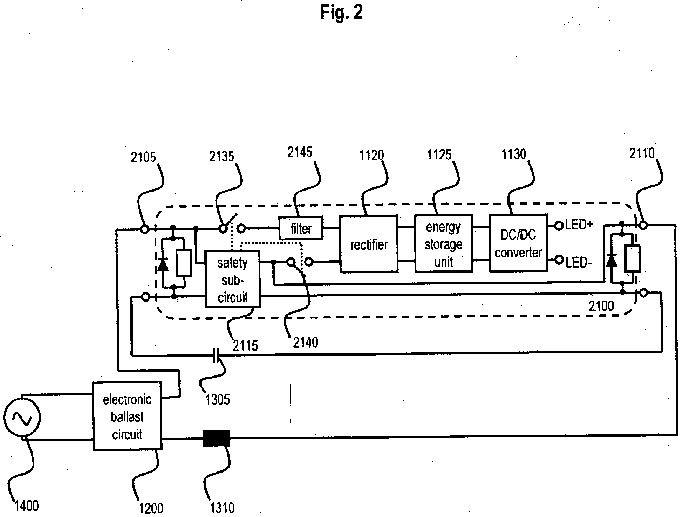

Fig. 2 shows another exemplary drive circuit 2100 for driving an LED array according to a further embodiment in connection with an electronic ballast circuit. In the embodiment illustrated in Fig. 2, the safety sub-circuit 2115 is configured to disconnect the power supply sub-circuit from the first and the second set of terminals 2105, 2110. The drive circuit 210 includes two switching units 2135 and 2140 for connecting/disconnecting the power supply sub-circuit from a supply of AC current by an electronic ballast circuit 1200. In more detail, the switching units 2135 and 2140 connect/disconnect the power supply sub-circuit from each of the two sets of terminals 2105 and 2110. The switching unit 2135 connects/disconnects the power supply sub-circuit to/from the first set of terminals 2105 and the switching unit 2140 connects/disconnects the power supply sub-circuit to/from the second set of terminals 2110.

The safety sub-circuit 2115 is similar to the safety sub-circuit 1115 of Fig. 1 and is also capable of detecting whether AC current is supplied via a terminal of at least one of the first and second set of terminals 2105, 2110 to be connected to the first and second socket of the lighting device holder. The safety sub-circuit 2115 controls the two switching units 2135 and 2140 according to the detection result. In case the safety sub-circuit 2115 detecting the absence of an AC current supplied via a terminal of at least one of the first or second set of terminals 2105, 2110, the safety sub-circuit 2115 controls the switching units 2135 and 2140 so as to interrupt the connection between the power supply sub-circuit and each of the two sets of terminals 2105 and 2110.

Accordingly, the safety sub-circuit 2115 disconnects the power supply sub-circuit from the two set of terminals 2105 and 2110 when the drive circuit 2100 is detached from the lighting device holder. Consequently, by the safety sub-circuit 2115 detecting whether a supplied AC current flows between the terminals of the first or second set of terminals and connecting the power supply sub-circuit only under this condition, the safety sub-circuit 2115 prevents a technician from being exposed to an AC current, e.g. when mounting the drive circuit in the sockets of the lighting device holder.

As shown in Fig. 2, the power supply sub-circuit includes a rectifier 1120, an energy storage unit 1125 and a DC/DC converter 1130 as in Fig. 1. Further, as illustrated in Fig. 1, a parallel circuit, comprising a resistor and a diode connected in parallel, is connected between the terminals of each of the two sets of terminals 2105, 2110. The parallel circuits enable the drive circuit 2100 to be mounted in both horizontally rotated orientations, as explained above.

The power supply sub-circuit further includes output terminals LED+ and LED- for connecting to an LED array. In particular, the DC/DC converter 1130 outputs a predetermined DC current or voltage level via output terminals LED+ and LED- for driving an LED array.

Additionally, the power supply sub-circuit may further include a filter 2145 for pre-filtering the AC current supplied via at least one set of terminals 2105 or 2110 to the power supply sub-circuit. In one embodiment, the filter 2145 may be implemented by connecting a resistor and a capacitor in parallel. Optionally, the filter 2145 may further include an inductor and/or an operational amplifier. The filter 2145 is configured to absorb a peak voltages received from the electronic ballast circuit 1200 and to also damp the supplied AC current from the electronic ballast circuit 1200 during shutdown, so that the drive circuit 2100 does not resonate.

As outlined already above with respect to Fig. 1, also drive circuit 2100 and the connected LED array are configured to simulate a fluorescent lighting device. Hence, the drive circuit 2100 has an overall load that corresponds to that of a typical fluorescent lighting device, preferably with low power consumption, available in the market, or that does not cause the electronic ballast circuit 1200 to go into error mode and interrupt the power supply.

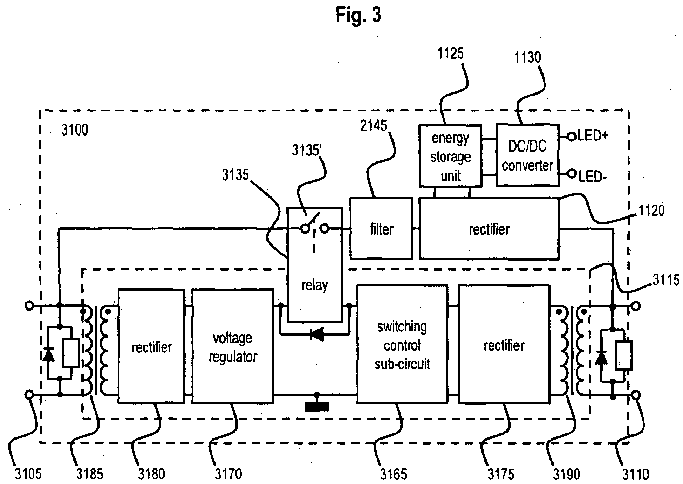

Fig. 3 shows another exemplary embodiment of a drive circuit 3100, where more details of the safety sub-circuit 3115 are highlighted. As shown in Fig. 3, the drive circuit 3100 includes a power supply sub-circuit which is based on the power supply sub-circuit illustrated in Fig. 1 and Fig. 2 comprising rectifier 1120, energy storage unit 1125 and DC/DC converter 1130. Further, the power supply sub-circuit of Fig. 3 includes a filter 2145 for pre-filtering the AC current supplied via at least one set of terminals 3105 or 3110 to the power supply sub-circuit corresponding to filter 2145 of Fig. 2.

The power supply sub-circuit also includes output terminals LED+ and LED- for connecting an LED array. In particular, the DC/DC converter 1130 outputs a predetermined DC current or voltage level via output terminals LED+ and LED- for driving an LED array.

Further, the drive circuit 3100 includes switching unit 1135 for connecting/disconnecting at least one set of terminals 3105 or 3110 to/from the power supply sub-circuit. The switching unit 1135 is exemplarily realized as a normally-open relay 3135 (including a switch 3135'), but is not limited thereto.

The drive circuit 3100 also includes safety sub-circuit 3115 for controlling the relay 3135. The safety sub-circuit 3115, illustrated in Fig. 3, includes a switching control sub-circuit 3165 for controlling the switching of the switching unit 1135 (relay 3135) and a voltage regulator 3170 for providing DC switching current at a voltage level suitable for operating the switching unit 1135 (relay 3135).

The switching control sub-circuit 3165 switches a connection of the switching unit 1135 (relay 3135) to a reference voltage level node so that the switching unit 1135 (relay 3135), supplied with the DC switching current from the voltage regulator, connects the power supply sub-circuit to the at least one set of terminals 3105 and 3110. The reference voltage level may be also a floating voltage level.

In case the switching control sub-circuit 3165 connects the switching unit 1135 (relay 3135) to the reference voltage level and in case the voltage regulator 3170 provides the DC switching current at a predefined voltage level, the potential difference between the predefined voltage level and the reference voltage level applied to the switching unit 1135 enables the switching unit 1135 (relay 3135) to connect the power supply sub-circuit to the at least one set of terminals 3105 and 3110.

In case the switching control sub-circuit 3165 provides a floating voltage level to the switching unit 1135 and the voltage regulator 3170 provides the DC switching current at a predefined voltage level, the switching unit 1135 is not subject to a potential difference between the predefined voltage level and the floating voltage level, so that a default operation in the switching unit 1135 disconnects the power supply sub-circuit from the at least one set of terminals 3105 and 3110. For this purpose, the switching control sub-circuit 3165 disconnects the switching unit 1135 from a reference/ground voltage level node.

As indicated in Fig. 3, the switching unit 1135 as of Fig. 1 and switching unit 2135 of Fig. 2 may be realized as a relay 3135 with a monostable switching behavior, which is in an non-conducting open state (switch 3135' is open), if the drive circuit 3100 is not connected to both sets of terminals 3105, 3110. Hence, unless drive circuit 3100 is not connected to both sets of terminals 3105, 3110 the relay 3135 galvanically isolates the LED array so that no power is flowing through the terminals 3105, 3110.

Alternatively, switching unit 1135 could be also realized as any other electronic or mechanic switching device capable of transferring an ignition pulse to the power supply sub-circuit and per default implementing a disconnected switching state.

Voltage regulator 3170 provides a DC switching current at a predefined voltage level suitable for switching unit 1135. The voltage regulator 3170 is connected via a rectifier 3180 to a transformer 3185. A first winding of transformer 3185 is connected to the first set of terminals 3105 and a second winding of transformer 3185 is connected to the rectifier 3180, so as to galvanically isolate the safety sub-circuit 3115 from the first set of terminals 3105.

Further, the switching control sub-circuit 3165 is connected via rectifier 3175 to a transformer 3190. A first winding of transformer 3190 is connected to the second set of terminals 3190 and a second winding of transformer 3190 is connected to the rectifier 3175, so as to galvanically isolating the safety sub-circuit 3115 from the second set of terminals 3110.

Due to a galvanic isolation of the safety sub-circuit 3115 from the first and the second set of terminals 3105 and 3110, current can be prevented from supplied via a terminal 3105 and 3110 through the safety sub-circuit 3115. Accordingly, the transformers 3185 and 3190 prevent current from flowing between the first set of terminals 3105 and the second set of terminals 3110.

The transformers 3185 and 3190 enable the voltage regulator 3170 and the switching control sub-circuit 3165 to operate without the first and second set of terminals 3105 and 3110 having a same reference voltage level.

The rectifiers 3175 and 3180 included in the safety sub-circuit 3115 are configured to output a rectified AC current, e.g. a rectified pre-heating AC current. Accordingly, if the safety sub-circuit 3115, namely the voltage regulator 3170 and the switching control sub-circuit 3165, detect an AC current, e.g. the pre-heating AC current, supplied via a terminal of each of the first and the second set of terminals 3105 and 3110, the safety sub-circuit 3115 controls the switching unit 3135 so that the power supply sub-circuit is connected to each of the two sets of the terminals 3105 and 3110.

As outlined already above with respect to Figs. 1 and 2, also drive circuit 3100 and the connected LED array are configured to simulate a fluorescent lighting device. Hence, the drive circuit 3100 has an overall load that corresponds to that of a typical fluorescent lighting device available in the market, or that does not cause the electronic ballast circuit 1200 to go into error mode and interrupt the power supply.

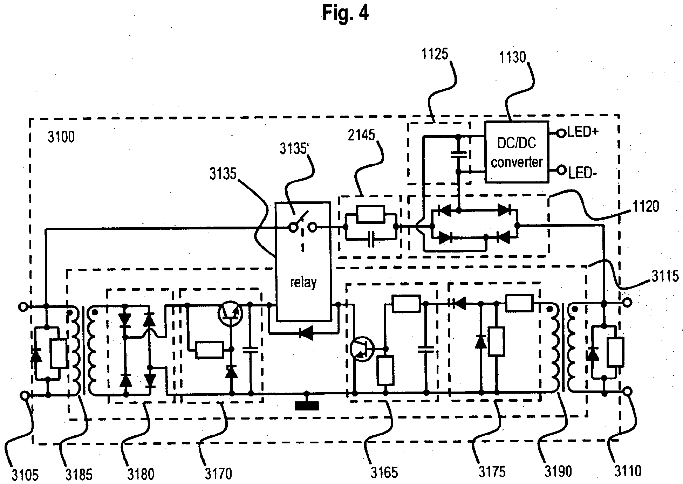

Fig. 4 shows a more detailed circuit diagram of the drive circuit 3100 of Fig. 3 according to an exemplary embodiment of the invention. The drive circuit 3100 shown in Fig. 4 includes full-wave rectifiers 1120 and 3180 and half-wave rectifier 3175.

The half-wave rectifier 3175 is formed by a first diode for at least partially carrying the current of the positive half-wave of an inputted AC current, and a second diode for at least partially eliminating the energy of the negative half-wave of the inputted AC current. The half-wave rectifier 3175 of Fig. 4 further includes a voltage divider formed of two resistors to adjust the voltage level forwarded by the first diode, to reduce the current flowing through the second diode of the negative half wave and to prevent the first and second diode from a high reverse bias voltage, e.g. due to the ignition pulse, by the voltage divider reducing the voltage level transferred during the positive half-wave.

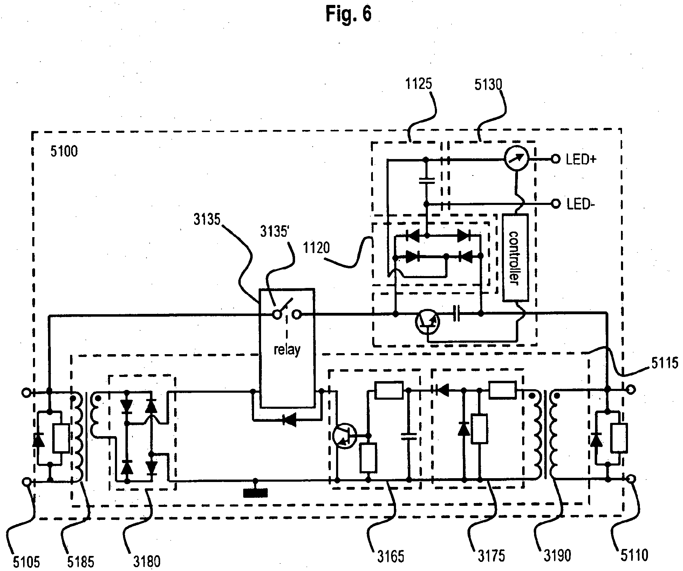

The safety sub-circuit 3115 further includes voltage regulator 3170 and switching control sub-circuit 3165. The main purpose of the voltage regulator 3170 is to provide a DC switching current at a predetermined voltage level to the switching unit 1135, respectively the relay 3135. If the DC switching current flows through the relay 3135 (respectively the coil thereof) the relay 3135 is closed. The switching control sub-circuit 3165 is used to control the flow of the DC switching current provided by the voltage regulator 3170 through the switching unit 1135, respectively the (coil of the) relay 3135 such that the relay 3135 is closed only in case the drive circuit 3100 is inserted in both sockets of the lighting device holder, i.e. the drive circuit 3100 is connected to the first set of terminals 3105 and the second set of terminals 3110 and received AC current through the terminals. Please note that this principle is also used in the embodiments that will be outlined below with respect to Figs. 6, 7 and 8.

The voltage regulator 3170 is formed by a transistor forwarding DC current inputted to an input of the voltage regulator for providing a predetermined voltage level at the output of the voltage regulator 3170 in response to the presence/absence of an AC current supplied via a terminal of the first set of terminals 3105. The voltage level of the voltage regulator 3170 is determined by a reverse-bias breakdown voltage of a Zener diode. A resistor is additionally provided for compensating for the threshold voltage of the transistor forwarding current between input and output of the voltage regulator 3170.

In case the input voltage to the voltage regulator 3170 is very high compared to the predetermined voltage level, at least a portion of current passes through the resistor and the Zener diode as breakdown current. If the input voltage to the voltage regulator 3170 is very low compared to the predetermined voltage level, most of the current is forwarded to the output connections of the voltage regulator 3170. The voltage regulator 3170 further includes a capacitor, connected between output connections of the voltage regulator 3170, for temporarily storing the predetermined voltage level.

The switching control sub-circuit 3165, as shown in Fig. 4, comprises a transistor for switching a connection between the switching unit 1135 (shown as relay 3135 with switch 3135' in Fig. 4) and a reference voltage level node of the safety sub-circuit 3115 in response to the presence/absence of an AC current supplied via a terminal of the second set of terminals 3110. Alternatively, the transistor could also be replaced by an optocoupler or relay. The switching control sub-circuit 3165 further includes a voltage divider setting a threshold voltage level according to which the transistor is switching or not-switching a connection from the switching unit 1135 to a common/floating voltage level node. The switching control sub-circuit 3165 further includes a capacitor, connected between the input connections of the switching control sub-circuit 3165, for temporarily storing the inputted voltage level.

In case the switching unit 1135 is implemented as a relay 3135 (comprising a coil for opening and closing the relay's switch 3135'), the switching control sub-circuit 3165 could connect one of the terminals of the coil to a reference voltage level to allow the DC switching current to flow through the coil to thereby close the normally-open switch 3135' in case the voltage level of the rectified AC current received from the half-wave rectifier 3175 is larger than the threshold voltage level set by the voltage divider. Similarly, if the voltage level of the rectified AC current received from half-wave rectifier 3175 is equal to or lower than the threshold voltage level, the switching control sub-circuit 3165 does not connect one of the terminals of the coil to a reference voltage level, so that the terminal is in open circuit state and the DC switching current is not flowing through the relay's coil and thus cannot cause the normally-open switch 3135' of the relay 3135 to close.

It should be noted that in all embodiments of the invention, it is also possible to implement the switching unit 1135 by means of a power transistor (e.g. power MOSFET). In one implementation, the switching unit 1135 is implemented by one or more power transistors (which in case there are two or more power transistors, are connected in series). The power transistor(s) are preferable power transistors that do not conduct any current on the source-drain path in case there is no gate potential applied ("normally-open"). The gate potential of the power transistor is controlled in a similar fashion as described above so as to "close" the power transistor (no current flowing on source-drain path) in case AC current is not supplied via the first set of terminals 3105 and the second set of terminals 3110 simultaneously.

Consequently, the switching unit 1135 is connected between the sub-circuit of transformer 3185 and rectifier 3180 and voltage regulator 3170 configured to provide a switching DC current at a predetermined voltage level base on the AC current received from the first set of terminals 3105 and the sub-circuit of transformer 3190, rectifier 3175 and switching control sub-circuit 3165 configured to provide a reference voltage based on the AC current received via the second set of terminals. Accordingly, the switching unit 1135 is controlled to connect/disconnect the power supply sub-circuit to/from at least one of the first or second set of terminals 3105, 3110 in response to the presence/absence of the AC current supplied via a terminal of the first or second set of terminals 3105, 3110.

The filter 2145 includes a resistor and a capacitor connected in parallel.

By the safety sub-circuit 3115 detecting whether a supplied AC current flows between the terminals of the first or second set of terminals and connecting the power supply sub-circuit only under this condition, the safety sub-circuit 3115 prevents a technician from being exposed to an AC current, e.g. when mounting the drive circuit in the sockets of the lighting device holder.

The energy storage unit 3125 includes a capacitor for at least partially storing energy of e.g. an ignition pulse supplied by the electronic ballast circuit 1200.

The DC/DC converter 3130 may include a load-circuit for simulating a load based on a voltage/current characteristic of a fluorescent lighting device, a counter for outputting a signal indicating a transition between a high-impedance and a low-impedance load, a PWM-controller for outputting a duty ratio signal according to the signal output by the load-circuit indicating the simulated load, according to the counter signal indicating a transition between a high-impedance and a low-impedance load and according to the DC current level outputted by the rectifier 1120 and/or the voltage level thereof, and an inverter sub-circuit for converting the DC current received from the rectifier 3120 and/or the voltage level thereof in response to the duty ratio signal of the PWM-controller. Accordingly, the DC/DC converter 3130 is capable of simulating a load of based on a voltage/current characteristic of a fluorescent lighting device.

Further, a parallel circuit comprising a resistor and a diode is connected between the terminals of each of the two sets of terminals 3105, 3110. The parallel circuits enable the drive circuit 3100 to be mounted in both horizontally rotated orientations.

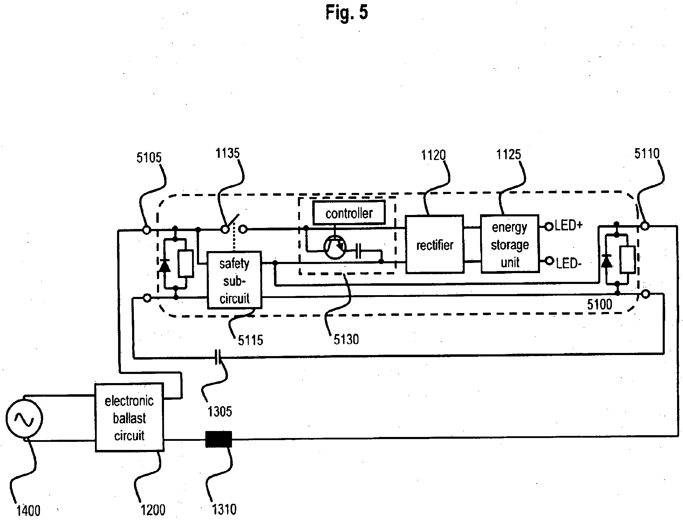

Fig. 5 shows another exemplary circuit diagram of a drive circuit 5100 for driving an LED array according to another embodiment of the invention in connection with the electronic ballast circuit 1200. In the embodiment illustrated in Fig. 2, the power supply sub-circuit is configured convert the supplied AC current to a DC current suitable for driving an LED array by a series circuit at least partially eliminating energy to be supplied by the electronic ballast circuit.

As can be seen from Fig. 5, the drive circuit 5100 includes a power supply sub-circuit comprising a rectifier 1120 and an energy storage unit 1125. The rectifier 1120 and the energy storage unit 1125 of Fig. 5 correspond to respective circuits shown in Figs. 1 to 4. Additionally, the power supply sub-circuit of Fig. 5 comprises a converter 5130 for at least partially bypassing the supplied AC current, thereby eliminating at least partially energy of supplied AC current, so that the DC current output by the power supply sub-circuit is reduced to a predetermined DC current or voltage level suitable for driving the LED array. The converter 5130 comprises a series circuit including a transistor and a capacitor which is connected between the input nodes of the power supply sub-circuit for receiving the AC current.

In particular, the series circuit of the transistor and capacitor controls the amount of energy that is converted by the power supply sub-circuit to a DC current for driving an LED array. By the transistor switching a bypass connection between the input nodes of the power supply sub-circuit via the capacitor, an inputted AC current to the power supply sub-circuit is bypassed through the capacitor. Accordingly, the amount of energy decreases which is converted by the power supply sub-circuit to DC current. Consequently, by a controller controlling the bypass current through the transistor and the capacitor, the conversion ratio of the supplied AC current to the DC current is adjusted to output a predetermined DC current or voltage level.

By adjusting the conversion ratio to the supplied AC current to the DC current for driving the LED array, the converter 5130 may simulate a load based on a voltage/current characteristic of a fluorescent lighting device.

The switching unit 1135 of Fig. 5 corresponds to the switching unit 1135 of Fig. 1, Fig. 3 and Fig. 4.

Further, the safety sub-circuit 5115 of Fig. 5 is based on the safety sub-circuit of Fig. 3 and Fig. 4 and will be explained in the description with respect to Fig. 6 illustrating an exemplary circuit diagram of a drive circuit 5100 for driving an LED array.

As outlined already above with respect to Figs. 1 to 3, also drive circuit 5100 of Fig. 5 (and Fig. 6) together with a connected LED array is configured to simulate a fluorescent lighting device. Hence, the drive circuit 5100 has an overall load that corresponds to that of a typical fluorescent lighting device available in the market, or that does not cause the electronic ballast circuit 1200 to go into error mode and interrupt the power supply.

Fig. 6 shows an exemplary circuit diagram of the drive circuit 5100 of Fig. 5 according to an exemplary embodiment of the invention. As can be seen from Fig. 6, the drive circuit 5100 includes a power supply sub-circuit comprising a rectifier 1120 and an energy storage unit 1125. The rectifier 1120 and the energy storage unit 1125 of Fig. 5 correspond to the respective circuits shown in Figs. 1 to 4. Switching unit 1135 is implemented as a relay 3135 but could also be realized by another normally-open switching element.

Additionally, the power supply sub-circuit of drive circuit 5100 comprises converter 5130 for at least partially bypassing energy of the supplied AC current so that the DC current output by the power supply sub-circuit corresponds to a predetermined DC current or voltage level suitable for driving the LED array.

The converter 5130 includes a series circuit including a transistor and a capacitor which is connected between the input nodes of the power supply sub-circuit for receiving the AC current. The transistor is controlled by a controller based on the current level flowing through one of the output terminals LED+ and LED-. Accordingly, a current detector may be provided in the current path between of one of the output terminals LED+ and LED-towards the LED array as exemplarily illustrated in Fig. 6.

As further shown in Fig. 6, the safety sub-circuit 5115 of drive circuit 5100 is quite similar to the safety sub-circuit 3115 shown in Fig. 3 and Fig. 4. In particular, the transformer 3190, the half-wave rectifier 3175 and the switching control sub-circuit 3165 and the full-wave rectifier 3180 correspond to the respective circuit of Fig. 3 and Fig. 4. Also in the switching control sub-circuit 3165 shown in Fig. 6 the transistor could be replaced by an optocoupler.

The safety sub-circuit 5115 differs from the safety sub-circuit 3115 of Fig. 3 and Fig. 4 in that no voltage regulator 3170 is needed. Instead transformer 5185 provides an uneven ratio of first windings to second windings so that a voltage regulator 3170 can be omitted.

A first winding of transformer 5185 is connected to the first set of terminals 5105 and a second winding of transformer 5185 is connected to the rectifier 3180 so as to galvanically isolate the safety sub-circuit 5115 from the first set of terminals 5105. In particular, the second winding of transformer 5185 are configured to only partly transfer energy of the AC current supplied via the first set of terminals 5105, to the safety sub-circuit 5115. Accordingly, transformer 5185 transforms the supplied AC current to an AC current at a reduced voltage level. The ratio of the first windings to the second windings of the transformer 5185 is fixed corresponding to the ratio of a maximum AC voltage to be supplied via the first set of terminals 5105 to the desired voltage level of the DC switching current for operating the switching unit 1135, or more precisely relay 3135. Rectifier 3180 thus provides only a DC current at a voltage level provided by transformer 5185 that is the DC switching current.

Consequently, the switching unit 1135 (or to be more precise relay 3135) is connected between the sub-circuit of transformer 5185 and rectifier 3180 configured to provide a DC switching current at a predetermined voltage level based on the AC current received from the first set of terminals 5105 and the sub-circuit of transformer 3190, rectifier 3175 and switching control sub-circuit 3165. As explained with respect to Fig. 4, in case there is an AC current received through the second set of terminals 5110, switching control sub-circuit 3165 connects one of the terminals of the coil to a reference voltage level to allow the DC switching current to flow through the coil. Thereby the normally-open switch 3135' is closed, in case the voltage level of the rectified AC current received from the half-wave rectifier 3175 is larger than the threshold voltage level set by the voltage divider. Similarly, if the voltage level of the rectified AC current received from half-wave rectifier 3175 is equal to or lower than the threshold voltage level (i.e. "no" AC current or better not sufficient AC current is received through the second set of terminals 5110), the switching control sub-circuit 3165 does not connect one of the terminals of the coil to a reference voltage level, so that the terminal is in open circuit state and the DC switching current is not flowing through the relay's coil and thus cannot cause the normally-open switch 3135' of the relay 3135 to close.

Accordingly, by the safety sub-circuit 5115 detecting whether an AC current flows through the terminals of the first set of terminals 5105 and second set of terminals 5110 and connecting the power supply sub-circuit only under this condition, the safety sub-circuit 5115 prevents a technician from being exposed to an AC current, e.g. when mounting the drive circuit in the sockets of the lighting device holder.

Due to a galvanically isolation of the safety sub-circuit 5115 from the first and the second set of terminals 5105 and 5110, current can be prevented from being supplied via a terminals 5105 and 5110 through the safety sub-circuit 5115. Accordingly, the transformers 5185 and 3190 prevent current from flowing between the first set of terminals 5105 and the second set of terminals 5110.

Further, a parallel circuit comprising a resistor and a diode is connected between the terminals of each of the two sets of terminals 5105, 5110. The parallel circuits enable the drive circuit 5100 to be mounted in both horizontally rotated orientations.

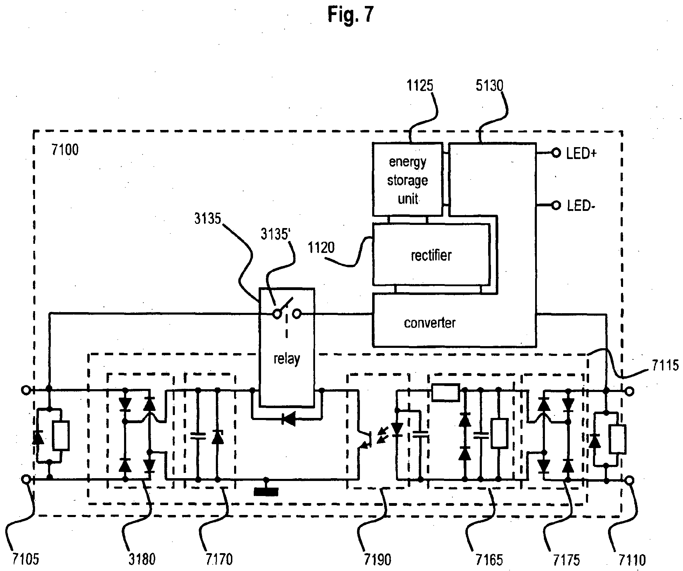

Fig. 7 shows another exemplary circuit diagram of a drive circuit 7100 for driving an LED array according to another embodiment of the invention. In this embodiment, the safety sub-circuit 7115 is not comprising any transformer for galvanic isolation, but the safety circuit is directly coupled to the sets of terminals 7105 and 7110 via rectifiers 3180 and 7175 respectively. Galvanic isolation is achieved by the use of an optocupler 7190.

The drive circuit 7100 includes a power supply sub-circuit comprising a rectifier 1120 and an energy storage unit 1125. The rectifier 1120 and the energy storage unit 1125 of Fig. 7 correspond to the respective circuits shown in Figs. 1 to 6. Additionally, the power supply sub-circuit of Fig. 7 comprises converter 5130 for at least partially bypassing energy of the supplied AC current so that the DC current output by the power supply sub-circuit corresponds to a predetermined DC current or voltage level suitable for driving the LED array. The converter 5130 corresponds to converter 5130 of Fig. 5 and Fig. 6.

As can be seen from Fig. 7, the safety sub-circuit 7115 is galvanically isolated from the second set of terminals 7110, namely by optocoupler 7190 transforming the AC current received via the second set of terminals 7110. Thereby, current can be prevented from supplied via a terminal 7105 and 7110 through the safety sub-circuit 7115. Accordingly, the optocoupler 7190 prevents current from flowing between the first set of terminals 7105 and the second set of terminals 7110.

The safety sub-circuit 7115 includes rectifier 3180 connected to the first set of terminals 7105 for rectifying the AC current received via the first set of terminals 7105. The rectified AC current is provided to voltage regulator 7170 also included in the safety sub-circuit 7115 for providing a DC switching current at a voltage level suitable for operating the switching unit 1135. The voltage regulator 7170 provides the DC switching current for the switching unit 1135, respectively the relay 3135. The voltage regulator 7170 includes a parallel circuit of a Zener diode and a capacitor, a reverse-bias breakthrough voltage of the Zener diode limiting the DC current to a voltage level suitable for operating the switching unit 1135. The capacitor temporarily stores the rectified AC current (DC current) received from rectifier 3180.

The safety sub-circuit 7115 further includes rectifier 7175 connected to the second set of terminals 7110 for rectifying the AC current received via the second set of terminals 7110. The rectified AC current is provided to voltage regulator 7160 also included in the safety sub-circuit 7115 for providing a DC current at a voltage level suitable for operating optocoupler 7190. The voltage regulator 7165 includes a parallel circuit of a capacitor and two serially connected diodes and a voltage divider including two resistors.

The safety sub-circuit 7115 also includes an optocoupler 7190 connecting the second voltage regulator 7165 and the switching unit 1135 so as to galvanically isolate the switching unit 1135 from the second set of terminals 7110. The optocoupler 7190 optically transmits a signal of the regulated DC current for controlling the flow of the DC switching current through the relay 3135. Accordingly, if the switching unit 1135 (relay 3135) is provided with the DC switching current by the voltage regulator 7170, the switching unit 1135 (relay 3135) connects the power supply sub-circuit to the at least one set of terminals 7105 and 7110 only in case the optocoupler 7190 connects the switching unit 1135 (relay 3135) to the reference voltage node, as explained previously.

Consequently, the switching unit 1135 (relay 3135) is connected between the sub-circuit of rectifier 3180 and voltage regulator 7170 configured to provide the DC switching current at a predetermined voltage level based on the AC current received from the first set of terminals 7105 and the sub-circuit of rectifier 7175, voltage regulator 7165, and optocoupler 7190 configured to control the flow of the DC switching current through the relay 3135 based on the AC current received via the second set of terminals. Accordingly, the switching unit 1135 is controlled to connect/disconnect the power supply sub-circuit to/from at least one of the first or second set of terminals 3105, 3110 in response to the presence/absence of the AC current supplied via a terminal of the first and second set of terminals 7105, 7110.

Accordingly, by the safety sub-circuit 7115 detecting whether a supplied AC current flows between the terminals of the first or second set of terminals 7105, 7110 and connecting the power supply sub-circuit only under this condition, the safety sub-circuit 7115 prevents a technician from being exposed to an AC current, e.g. when mounting the drive circuit in the sockets of the lighting device holder.

Further, a parallel circuit comprising a resistor and a diode is connected between the terminals of each of the two sets of terminals 7105, 7110. The parallel circuits enable the drive circuit 7100 to be mounted in both horizontally rotated orientations.

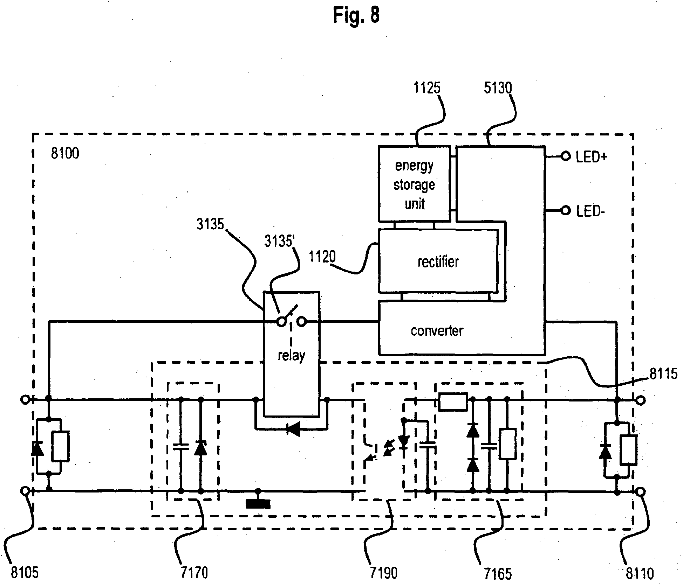

Fig. 8 shows another exemplary circuit diagram of a drive circuit 8100 for driving an LED array according to a further embodiment of the invention. Drive circuit 8100 includes a power supply sub-circuit comprising a rectifier 1120 and an energy storage unit 1125. The rectifier 1120 and the energy storage unit 1125 of Fig. 8 correspond to the respective circuits shown in Figs. 1 to 7.

Additionally, the power supply sub-circuit of Fig. 8 comprises converter 5130 for at least partially bypassing energy of the supplied AC current so that the DC current output by the power supply sub-circuit corresponds to a predetermined DC current or voltage level suitable for driving the LED array. The converter 5130 corresponds to converter 5130 of Fig. 5 to 7.

As can be seen from Fig. 8, the safety sub-circuit 8115 is galvanically isolated from the second set of terminals 8110, namely by optocoupler 7190 transforming the AC current received via the second set of terminals 5110. Thereby, current can be prevented from supplied via a terminal 8105 and 8110 through the safety sub-circuit 8115. Accordingly, the optocoupler 8190 prevents current from flowing between the first set of terminals 8105 and the second set of terminals 8110.

The safety sub-circuit 8115 includes a parallel circuit 7170 of a Zener diode and a capacitor, for providing a DC switching current at a voltage level suitable for operating the switching unit 1135, which is shown as relay 3135 in Fig. 8. A reverse-bias breakthrough voltage of the Zener diode limits the positive half wave of the supplied AC current to a voltage level suitable for operating the switching unit 1135 and a preferably low forward-bias threshold voltage of the Zener diode eliminates the negative half wave of the supplied AC current. The capacitor temporarily stores and filters the AC current received via the first set of terminals 8105.

The safety sub-circuit 8115 further includes a voltage regulator 7165 to be connected to the second set of terminals 8110. The voltage regulator 7165 includes a parallel circuit of a capacitor and two serially connected diodes and a voltage divider including two resistors. In particular, the two serially connected diodes eliminate the negative half wave of the AC current supplied via the second set of terminals 8110. Further, the voltage divider allows for providing a DC current at a voltage level suitable for operating optocoupler 7190.

The safety sub-circuit 8115 also includes an optocoupler 7190 connecting the second voltage regulator 7165 and the switching unit 1135 so as to galvanically isolate the switching unit 1135 (relay 3135) from the second set of terminals 8110. The optocoupler 7190 optically transmits a signal of the regulated DC current from regulator 7165 controlling the switching operation of switching unit 1135 (relay 3135) by connecting/disconnecting same to/from a reference voltage node according to the regulated DC current voltage received via the second set of terminals 8110. Accordingly, in case the switching unit 1135 is provided with the DC switching current by the voltage regulator 7170, the switching unit 1135 connects the power supply sub-circuit to the at least one set of terminals 8105 and 8110, in case the optocoupler 7190 allows the DC switching current to flow through the switching unit 1135 (relay 3135).

Accordingly, as can be seen from Fig. 8, the safety sub-circuit 8115 is operable without providing rectifiers 3180 and 7175 as for example shown in Fig. 7. Consequently, the switching unit 1135 in form of relay 3135 is connected between the sub-circuit of the parallel circuit 7170 providing the DC switching current at a predetermined voltage level base on the AC current received from the first set of terminals 7105 and the sub-circuit of voltage regulator 7165, and optocoupler 7190 configured to switch the switching unit 1135 to a reference voltage based on the AC current received via the second set of terminals. Accordingly, the switching unit 1135 is controlled to connect/disconnect the power supply sub-circuit to/from the first and/or second set of terminals 8105, 8110 in response to the presence/absence of the AC current supplied via a terminal of the first or second set of terminals 8105, 8110.

Accordingly, by the safety sub-circuit 8115 detecting whether or not an AC current flows between the terminals of the first or second set of terminals and connecting the power supply sub-circuit only under this condition, the safety sub-circuit 8115 prevents a technician from being exposed to an AC current, e.g. when mounting the drive circuit in the sockets of the lighting device holder.

Further, a parallel circuit comprising a resistor and a diode is connected between the terminals of each of the two sets of terminals 8105, 8110. The parallel circuits enable the drive circuit 8100 to be mounted in both horizontally rotated orientations.

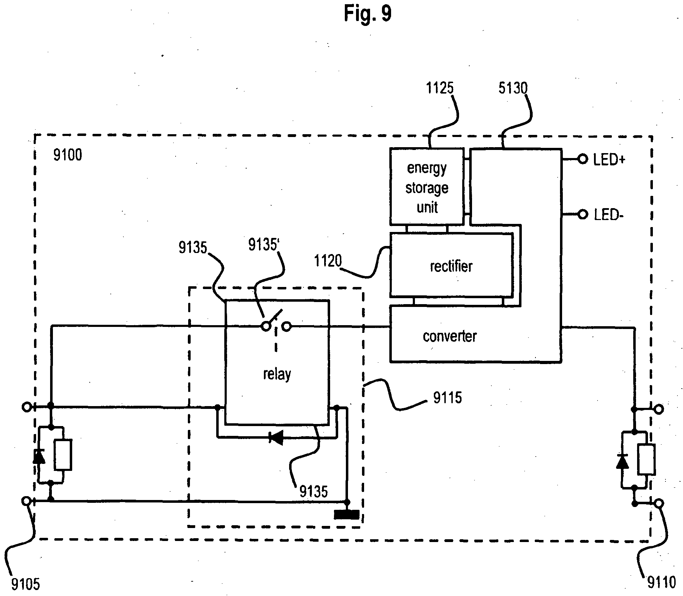

Fig. 9 shows another exemplary circuit diagram of a drive circuit 9100 for driving an LED array according to a further embodiment of the invention. In this embodiment, the safety sub-circuit is connected to only one set of terminals 9105. As can be seen from Fig. 9, the drive circuit 9100 includes a power supply sub-circuit comprising a rectifier 1120 and an energy storage unit 1125. The rectifier 1120 and the energy storage unit 1125 of Fig. 9 correspond to the respective circuits shown in Figs. 1 to 8.

Additionally, the power supply sub-circuit of Fig. 9 comprises converter 5130 for at least partially bypassing energy of the supplied AC current so that the DC current output by the power supply sub-circuit corresponds to a predetermined DC current or voltage level suitable for driving the LED array. The converter 5130 corresponds to converter 5130 of Fig. 5 to 8.

Since the safety sub-circuit 9115 is only connected to the first set of terminals 9105, current cannot flow through the safety sub-circuit 9115 between the terminals 9105 and 9110. The safety sub-circuit 9115 includes a relay 9135 connected to the first set of terminals 9105 for connecting/disconnecting the power supply sub-circuit to/from the first set of terminals 9105 in response to the presence/absence of the AC current supplied via a terminal of the first set of terminals 9105.

Alternatively or additionally, another safety sub-circuit including another relay, not shown but identical to the safety sub-circuit 9115, may be connected to the second set of terminals 9110 for connecting/disconnecting the power supply sub-circuit to/from the second set of terminals 9110 in response to the presence/absence of the AC current supplied via a terminal of the second set of terminals 9110.

In one exemplary implementation, relay 9135 includes a coil that could be configured to receive the AC current supplied via the first set of terminals 9105. The AC current would generate an electromagnetic field in the coil of suitable strength to connect the power supply sub-circuit to the first set of terminals 9105 based on the AC current flowing between the first set of terminals. This connection/disconnection may be directly controlled by allowing the AC current of terminals 9105 to flow directly through the coil of relay 9135 so that the switch 9135' thereof is closed and conducting in case the drive circuit is inserted into the lighting device holder.

Further, the safety sub-circuit 9115 includes a diode connected in parallel to the transformer/relay unit 9135. The diode provides for a reverse polarity protection of the transformer/relay unit 9135 by short-circuiting the reverse-polarity half-wave of the AC current.

Further, a parallel circuit comprising a resistor and a diode is connected between the terminals of each of the two sets of terminals 9105, 9110. The parallel circuits enable the drive circuit 9100 to be mounted in both horizontally rotated orientations.

Also the drive circuits of Figs. 7 to 9 and their connected LED arrays are configured to simulate a fluorescent lighting device. Hence, the respective drive circuits have an overall load that corresponds to that of a typical fluorescent lighting device, or that does not cause the electronic ballast circuit 1200 to go into error mode and interrupt the power supply.

## Claims

1. A drive circuit (3100) for driving a light-emitting diode (LED) array based on an AC current supplied by an electronic ballast circuit for driving a fluorescent lighting device, the electronic ballast circuit (1200) being housed in a lighting device holder for a fluorescent lighting device, the drive circuit (3100) comprising:
a first set and a second set of terminals (3105; 3110) configured to respectively connect the drive circuit (3100) to the electronic ballast circuit (1200) via a first and a second socket of the lighting device holder;
a power supply sub-circuit comprising an AC/DC converter for converting the supplied AC current supplied by an electronic ballast circuit to a DC current, and further comprising an energy storage unit (1125) for at least partially storing energy of the converted DC current for driving the LED array;
a safety sub-circuit (3115) including a switching unit (3135) for connecting the power supply sub-circuit to the first set of terminals or second set of terminals only when the AC current is received through a terminal of the first set of terminals (3105) and a terminal of the second set of terminals (3110)
**characterized in that**
the switching unit is (3135) realized as a relay and the safety sub-circuit (3115) comprises:
a voltage regulating sub-circuit configured to provide a DC switching current at a predetermined voltage level based on the AC current received through a terminal of the first set of terminals (3105) to operate the switching unit (3135), and
a control sub-circuit (3165) configured to control the flow of the DC switching current through the switching unit (3135) in response to an AC current flowing through a terminal of the second set of terminals (3106), to thereby control the switching operation of the switching unit (3135).

2. The drive circuit according to claim 1, wherein:
the voltage regulating sub-circuit of the safety sub-circuit (3115) comprises:
- a first transformer (3185) configured to galvanically isolate the regulating sub-circuit from the first set of terminals (3105) and to transfer the AC current received through the first set of terminals (3105),
- a first rectifier (3180) configured to rectify the transferred AC current received from the first transformer (3185), and
- a voltage regulator (3170) configured to regulate the voltage level of the rectified AC current from the first rectifier (3180) for providing the DC switching current at the predetermined voltage level to operate the switching unit (3135); and
wherein the control sub-circuit (3165) of the safety sub-circuit (3115) comprises:
- a second transformer (3190) configured to galvanically isolate the regulating sub-circuit from the second set of terminals (3110) and to transfer the AC current received through the second set of terminals (3110),
- a second rectifier (3175) configured to rectify the AC current received from the second transformer (3190), and
- a switching control sub-circuit (3165) configured to control the flow of the DC switching current through the switching unit (3135) based on a comparison of the voltage level of the rectified AC current received from the second rectifier to a threshold voltage level.

3. The drive circuit according to claim 1, wherein:
the voltage regulating sub-circuit of the safety sub-circuit (5115) comprises:
- a first transformer (5185) configured to galvanically isolate the voltage regulating sub-circuit from the first set of terminals (5105) and to reduce the voltage level of the AC current received through the first set of terminals (5105), and
- a first rectifier (3180) configured to rectify the transferred AC current received from the first transformer (5185) and to provide the DC switching current at the predetermined voltage level to operate the switching unit (3135);
the control sub-circuit of the safety sub-circuit (5115) comprises:
- a second transformer (3190) configured to galvanically isolate the regulating sub-circuit from the second set of terminals (5110) and to transfer the AC current received through the second set of terminals (5110),
- a second rectifier (3175) configured to rectify the AC current received from the second transformer (3190), and
- a switching control sub-circuit (3165) configured to control the flow of the DC switching current through the switching unit (3135) based on a comparison of the voltage level of the rectified AC current received from the second rectifier to a threshold voltage level.

4. The drive circuit according to claim 1, wherein:
the voltage regulating sub-circuit of the safety sub-circuit (7115) comprises:
- a first rectifier (3180) configured to rectify the AC current received via the first set of terminals (7105), and
- a voltage regulator (7170)configured to regulate the voltage level of the rectified AC current from the first rectifier (3180) for providing the DC switching current at the predetermined voltage level to operate the switching unit (3135); and wherein
the control sub-circuit of the safety sub-circuit (7115) comprises:
- a second rectifier (7175) configured to rectify the AC current received via the second set of terminals (7110) and to transfer the AC current received through the second set of terminals (7110),
- a second voltage regulator (7165) configured to regulate the voltage level of the rectified AC current received from the second rectifier (7175) for providing a DC control current at a voltage level suitable for operating an optocoupler (7190), and
- an optocoupler (7190) for controlling the flow of the DC switching current through the switching unit (3135) based on a comparison of the voltage level of the DC control current received from the second voltage regulator (7165) to a threshold voltage level.

5. The drive circuit according to claim 1, wherein:
the voltage regulating sub-circuit of the safety sub-circuit (8115) comprises:
- a first parallel circuit (7170) including a Zener diode and a capacitor connected in parallel to the terminals of the first set of terminals, the first parallel circuit providing the DC switching current at the predetermined voltage level to operate the switching unit (3135); and
the control sub-circuit included in the safety sub-circuit (8115)comprises:
- a sub-circuit including a voltage divider, a capacitor and two serially connected diodes connected to the second set of terminals (8110), and
- an optocoupler (7190) for controlling the flow of the DC switching current through the switching unit based on a comparison of a voltage level of a DC current transferred by the sub-circuit to a threshold voltage level.

6. The drive circuit for driving an LED array according to one of claims 1 to 5 wherein:
the switching unit (3135) includes a normally-open relay with a monostable switching behavior, and
the safety sub-circuit is configured to generate a DC switching current for operating the relay.

7. The drive circuit according to one of claims 1 to 6, wherein the electronic ballast circuit (1200) provides an operating AC current at a predefined voltage level, and an ignition pulse with a peak voltage level higher than the voltage level of the operating AC current;
wherein the AC/DC converter includes a rectifier (1120) configured to rectify the ignition pulse and/or the operating AC current supplied from the electronic ballast circuit (1200) for outputting a DC current;
wherein the energy storage unit (1125) is configured to at least partially store the energy of the rectified ignition pulse and/or the rectified operating AC current from the AC/DC converter's rectifier; and
wherein the power supply sub-circuit further includes:
- a DC/DC (3130) converter configured to convert the stored energy of the ignition pulse and/or the stored operating AC current to a predetermined DC current or voltage level for driving the LED array, or
- a series circuit including a transistor and a capacitor configured to at least partially bypass the energy of the ignition pulse and/or the energy of the operating AC current for providing a reduced ignition pulse and/or a reduced Operation AC current to the third rectifier so that the DC current output by the power supply sub-circuit or the voltage level thereof corresponds to a predetermined DC current respective voltage level for driving the LED array; and
wherein the drive circuit further includes a filter (2145) for pre-filtering the ignition pulse and/or operating AC current to be supplied to the power supply sub-circuit via at least one of the first or second set of terminals (3105; 3110).

8. The drive circuit according to claim 7, wherein the DC/DC converter (3130) included in the power supply sub-circuit further comprises:
a load-circuit configured to simulate a load of a fluorescent lighting device based on a voltage/current characteristic of the fluorescent lighting device;
a PWM-controller configured to output a duty ratio signal according to a signal output by the load-circuit indicating the simulated load, according to a counter signal and according to the DC current level outputted by the third rectifier and/or the voltage level thereof; and
an inverter sub-circuit configured to convert the DC current received from the rectifier and/or the voltage level thereof depending on the duty ratio signal of the PWM-controller.

9. The drive circuit according to claim 7 or 8, wherein the power supply sub-circuit further comprises a controller configured to output a signal determining an amount of energy to be bypassed by the transistor of the series circuit according to the DC current/voltage level outputted by the power supply sub-circuit for controlling the transistor of the series circuit, to thereby adjust the current flowing through the drive circuit and/or the voltage level thereof to simulate a load of a fluorescent lighting device.

10. A light-emitting diode (LED) lighting device receiving an AC current from an externally housed electronic ballast circuit, the LED lighting device comprising:
the drive circuit according to one of claims 1 to 9; and
an LED array connected to the power supply sub-circuit of the drive circuit.

11. The LED lighting device according to claim 10, further comprising an electronic ballast circuit for replacing the externally housed electronic ballast circuit upon failure.

## Patentansprüche

1. Treiberschaltung (3100) zum Ansteuern einer Leuchtdioden (LED)-Anordnung auf Basis eines Wechselstroms, der von einer elektronischen Ballastschaltung zum Ansteuern einer Fluoreszenzbeleuchtungseinrichtung zugeführt wird, wobei die elektronische Ballastschaltung (1200) in einem Beleuchtungseinrichtungshalter für eine Fluoreszenzbeleuchtungseinrichtung untergebracht ist und die Treiberschaltung (3100) folgendes umfasst:
einen ersten und einen zweiten Satz Klemmen (3105; 3110), die dazu eingerichtet sind, die Treiberschaltung (3100) jeweils über eine erste und eine zweite Buchse des Beleuchtungseinrichtungshalters mit der elektronischen Ballastschaltung (1200) zu verbinden;
eine Stromversorgungsteilschaltung, umfassend einen AC/DC-Wandler zum Umwandeln des von einer elektronischen Ballastschaltung zugeführten Wechselstroms in einen Gleichstrom, und ferner umfassend eine Energiespeichereinheit (1125) zum zumindest teilweisen Speichern von Energie des umgewandelten Gleichstroms zum Ansteuern der LED-Anordnung;
eine Sicherheitsteilschaltung (3115), enthaltend eine Schalteinheit (3135) zum Verbinden der Stromversorgungsteilschaltung nur mit dem ersten Satz Klemmen oder dem zweiten Satz Klemmen, wenn der Wechselstrom durch eine Klemme des ersten Satzes Klemmen (3105) und eine Klemme des zweiten Satzes Klemmen (3110) empfangen wird,
**dadurch gekennzeichnet, dass**
die Schalteinheit (3135) als Relais verwirklicht ist und die Sicherheitsteilschaltung (3115) umfasst:
eine Spannungsregelungsteilschaltung, die dazu eingerichtet ist, einen DC-Schaltstrom mit einem vorbestimmten Spannungspegel auf Basis des durch eine Klemme des ersten Satzes Klemmen (3105) empfangenen Wechselstroms für den Betrieb der Schalteinheit (3135) bereitzustellen, und
eine Steuerteilschaltung (3165), die dazu eingerichtet ist, den Fluss des DC-Schaltstroms durch die Schalteinheit (3135) als Reaktion auf einen Wechselstrom zu steuern, der durch eine Klemme des zweiten Satzes Klemmen (3106) fließt, um dadurch den Schaltbetrieb der Schalteinheit (3135) zu steuern.

2. Treiberschaltung nach Anspruch 1, wobei:
die Spannungsregelungsteilschaltung der Sicherheitsteilschaltung (3115) umfasst:
einen ersten Transformator (3185), der dazu eingerichtet ist, die Regelungsteilschaltung galvanisch vom ersten Satz Klemmen (3105) zu isolieren und den durch den ersten Satz Klemmen (3105) empfangenen Wechselstrom zu übertragen,
einen ersten Gleichrichter (3180), der zum Gleichrichten des übertragenen Wechselstroms, der vom ersten Transformator (3185) empfangen wird, eingerichtet ist, und
einen Spannungsregler (3170), der dazu eingerichtet ist, den Spannungspegel des gleichgerichteten Wechselstroms vom ersten Gleichrichter (3180) zu regeln, um den DC-Schaltstrom mit dem vorbestimmten Spannungspegel für den Betrieb der Schalteinheit (3135) bereitzustellen, und
wobei die Steuerteilschaltung (3165) der Sicherheitsteilschaltung (3115) umfasst:
einen zweiten Transformator (3190), der dazu eingerichtet ist, die Regelungsteilschaltung galvanisch vom zweiten Satz Klemmen (3110) zu isolieren und den durch den zweiten Satz Klemmen (3110) empfangenen Wechselstrom zu übertragen,
einen zweiten Gleichrichter (3175), der zum Gleichrichten des vom zweiten Transformator (3190) empfangenen Wechselstroms eingerichtet ist, und
eine Schaltsteuerteilschaltung (3165), die dazu eingerichtet ist, den Fluss des DC-Schaltstroms durch die Schalteinheit (3135) anhand eines Vergleichs des Spannungspegels des gleichgerichteten Wechselstroms, der vom zweiten Gleichrichter empfangen wird, mit einem Schwellenspannungspegel zu steuern.

3. Treiberschaltung nach Anspruch 1, wobei die Spannungsregelungsteilschaltung der Sicherheitsteilschaltung (5115) umfasst:
einen ersten Transformator (5185), der dazu eingerichtet ist, die Spannungsregelungsteilschaltung galvanisch vom ersten Satz Klemmen (5105) zu isolieren und den Spannungspegel des durch den ersten Satz Klemmen (5105) empfangenen Wechselstroms zu verringern, und
einen ersten Gleichrichter (3180), der zum Gleichrichten des übertragenen Wechselstroms, der vom ersten Transformator (5185) empfangen wird, und zum Bereitstellen des DC-Schaltstroms mit dem vorbestimmten Spannungspegel für den Betrieb der Schalteinheit (3135) eingerichtet ist;
wobei die Steuerteilschaltung der Sicherheitsteilschaltung (5115) umfasst:
einen zweiten Transformator (3190), der dazu eingerichtet ist, die Regelungsteilschaltung galvanisch vom zweiten Satz Klemmen (5110) zu isolieren und den durch den zweiten Satz Klemmen (5110) empfangenen Wechselstrom zu übertragen,
einen zweiten Gleichrichter (3175), der zum Gleichrichten des vom zweiten Transformator (3190) empfangenen Wechselstroms eingerichtet ist, und
eine Schaltsteuerteilschaltung (3165), die dazu eingerichtet ist, den Fluss des DC-Schaltstroms durch die Schalteinheit (3135) anhand eines Vergleichs des Spannungspegels des gleichgerichteten Wechselstroms, der vom zweiten Gleichrichter empfangen wird, mit einem Schwellenspannungspegel zu steuern.

4. Treiberschaltung nach Anspruch 1, wobei:
die Spannungsregelungsteilschaltung der Sicherheitsteilschaltung (7115) umfasst:
einen ersten Gleichrichter (3180), der zum Gleichrichten des über den ersten Satz Klemmen (7105) empfangenen Wechselstroms eingerichtet ist, und
einen Spannungsregler (7170), der dazu eingerichtet ist, den Spannungspegel des gleichgerichteten Wechselstroms vom ersten Gleichrichter (3180) zu regeln, um den DC-Schaltstrom mit dem vorbestimmten Spannungspegel für den Betrieb der Schalteinheit (3135) bereitzustellen, und wobei
die Steuerteilschaltung der Sicherheitsteilschaltung (7115) umfasst:
einen zweiten Gleichrichter (7175), der zum Gleichrichten des über den zweiten Satz Klemmen (7110) empfangenen Wechselstroms und zum Übertragen des durch den zweiten Satz Klemmen (7110) empfangenen Wechselstroms eingerichtet ist,
einen zweiten Spannungsregler (7165), der dazu eingerichtet ist, den Spannungspegel des gleichgerichteten Wechselstroms, der vom zweiten Gleichrichter (7175) empfangen wird, zu regeln, um einen DC-Steuerstrom mit einem Spannungspegel bereitzustellen, der für den Betrieb eines Optokopplers (7190) geeignet ist, und
einen Optokoppler (7190), der dazu eingerichtet ist, den Fluss des DC-Schaltstroms durch die Schalteinheit (3135) anhand eines Vergleichs des Spannungspegels des DC-Steuerstroms, der vom zweiten Spannungsregler (7165) empfangen wird, mit einem Schwellenspannungspegel zu steuern.

5. Treiberschaltung nach Anspruch 1, wobei:
die Spannungsregelungsteilschaltung der Sicherheitsteilschaltung (8115) umfasst:
eine erste Parallelschaltung (7170) mit einer Zenerdiode und einem Kondensator, die parallel mit den Klemmen des ersten Satzes Klemmen verbunden sind, wobei die erste Parallelschaltung den DC-Schaltstrom mit dem vorbestimmten Spannungspegel für den Betrieb der Schalteinheit (3135) bereitstellt, und
die in der Sicherheitsteilschaltung (8115) enthaltene Steuerteilschaltung umfasst:
eine Teilschaltung mit einem Spannungsteiler, einem Kondensator und zwei in Reihe verbundenen Dioden, die mit dem zweiten Satz Klemmen (8110) verbunden sind, und
einen Optokoppler (7190) zum Steuern des Flusses des DC-Schaltstroms durch die Schalteinheit anhand eines Vergleichs eines Spannungspegels eines DC-Steuerstroms, der von der Teilschaltung übertragen wird, mit einem Schwellenspannungspegel.

6. Treiberschaltung zum Ansteuern einer LED-Anordnung nach einem der Ansprüche 1 bis 5, wobei:
die Schalteinheit (3135) ein normalerweise offenes Relais mit monostabilem Schaltverhalten aufweist, und
die Sicherheitsteilschaltung dazu eingerichtet ist, einen DC-Schaltstrom zum Betätigen des Relais zu erzeugen.

7. Treiberschaltung nach einem der Ansprüche 1 bis 6, wobei die elektronische Ballastschaltung (1200) einen Betriebswechselstrom mit einem vorgegebenen Spannungspegel und einen Zündimpuls mit einem Spitzenspannungspegel bereitstellt, der höher als der Spannungspegel des Betriebswechselstroms ist;
wobei der AC/DC-Wandler einen Gleichrichter (1120) aufweist, der zum Gleichrichten des Zündimpulses und/oder des Betriebswechselstroms, der von der elektronischen Ballastschaltung (1200) zugeführt wird, zur Ausgabe eines Gleichstroms eingerichtet ist;
wobei die Energiespeichereinheit (1125) dazu eingerichtet ist, zumindest teilweise die Energie des gleichgerichteten Zündimpulses und/oder des gleichgerichteten Betriebswechselstroms vom Gleichrichter des AC/DC-Wandlers zu speichern, und
wobei die Stromversorgungsteilschaltung ferner aufweist:
einen DC/DC-Wandler (3130), der dazu eingerichtet ist, die gespeicherte Energie des Zündimpulses und/oder des gespeicherten Betriebswechselstroms zu einem vorbestimmten Gleichstrom- oder Spannungspegel zum Ansteuern der LED-Anordnung umzuwandeln, oder
eine Reihenschaltung mit einem Transistor und einem Kondensator, die dazu eingerichtet ist, zumindest teilweise die Energie des Zündimpulses und/oder die Energie des Betriebswechselstroms umzuleiten, um einen verringerten Zündimpuls und/oder einen verringerten Betriebswechselstrom dem dritten Gleichrichter zuzuführen, so dass der von der Stromversorgungsteilschaltung ausgegebene Gleichstrom oder dessen Spannungspegel einem vorbestimmten Gleichstrom bzw. Spannungspegel zum Ansteuern der LED-Anordnung entspricht, und
wobei die Treiberschaltung ferner einen Filter (2145) zum Vorfiltern des Zündimpulses und/oder des Betriebswechselstroms, der der Stromversorgungsteilschaltung über zumindest den ersten und/oder den zweiten Satz Klemmen (3105; 3110) zugeführt werden soll, aufweist.

8. Treiberschaltung nach Anspruch 7, wobei der in der Stromversorgungsteilschaltung enthaltene DC/DC-Wandler (3130) ferner umfasst:
eine Lastschaltung, die dazu eingerichtet ist, eine Last einer Fluoreszenzbeleuchtungseinrichtung anhand einer Spannungs/Stromeigenschaft der Fluoreszenzbeleuchtungseinrichtung zu simulieren;
einen PWM-Controller, der dazu eingerichtet ist, ein Tastverhältnissignal gemäß einem Ausgangssignal der Lastschaltung auszugeben, das die simulierte Last anzeigt, gemäß einem Zählersignal und gemäß dem Gleichstrompegel, der vom dritten Gleichrichter ausgegeben wird, und
eine Inverterteilschaltung, die dazu eingerichtet ist, den vom Gleichrichter empfangenen Gleichstrom und/oder dessen Spannungspegel abhängig vom Tastverhältnissignal des PWM-Controllers umzuwandeln.

9. Treiberschaltung nach Anspruch 7 oder 8, wobei die Stromversorgungsteilschaltung ferner einen Controller umfasst, der zur Ausgabe eines Signals eingerichtet ist, das eine Energiemenge bestimmt, die vom Transistor der Reihenschaltung gemäß dem Gleichstrom/Spannungspegel, der von der Stromversorgungsteilschaltung ausgegeben wird, zum Steuern des Transistors der Reihenschaltung umgeleitet werden soll, um dadurch den Stromfluss durch die Treiberschaltung und/oder dessen Spannungspegel anzupassen und eine Last einer Fluoreszenzbeleuchtungseinrichtung zu simulieren.

10. Leuchtdioden (LED)-Beleuchtungseinrichtung, die einen Wechselstrom von einer extern untergebrachten elektronischen Ballastschaltung empfängt, wobei die LED-Beleuchtungseinrichtung umfasst:
die Treiberschaltung nach einem der Ansprüche 1 bis 9 und
eine LED-Anordnung, die mit der Stromversorgungsteilschaltung der Treiberschaltung verbunden ist.

11. LED-Beleuchtungseinrichtung nach Anspruch 10, ferner umfassend eine elektronische Ballastschaltung zum Auswechseln der extern untergebrachten elektronischen Ballastschaltung bei deren Versagen.

## Revendications

1. Circuit pilote (3100) pour piloter un réseau de diodes électroluminescentes (LED) sur la base d'un courant alternatif alimenté par un circuit de ballast électronique pour piloter un dispositif d'éclairage fluorescent, le circuit de ballast électronique (1200) étant logé dans un support de dispositif d'éclairage pour un dispositif d'éclairage fluorescent, le circuit pilote (3100) comprenant :
un premier groupe et un second groupe de bornes (3105 ; 3110) configurés pour connecter respectivement le circuit pilote (3100) au circuit de ballast électronique (1200) via une première et une seconde prise du support de dispositif d'éclairage ;
un sous-circuit d'alimentation de puissance comprenant un convertisseur alternatif/continu pour convertir le courant alternatif alimenté par un circuit de ballast électronique en un courant continu, et comprenant en outre une unité de stockage d'énergie (1125) pour stocker au moins partiellement l'énergie du courant continu converti pour piloter le réseau de LED ;
un sous-circuit de sécurité (3115) incluant une unité de commutation (3135) pour connecter le sous-circuit d'alimentation de puissance au premier groupe de bornes ou au second groupe de bornes iniquement quand le courant alternatif est reçu via une borne du premier groupe de bornes (3105) et une borne du second groupe de bornes (3110),
**caractérisé en ce que**
l'unité de commutation (3135) est réalisée comme un relais et le sous-circuit de sécurité (3115) comprend :
un sous-circuit de régulation de voltage configuré pour fournir un courant de commutation continu à un niveau de voltage prédéterminé basé sur le courant alternatif reçu via une borne du premier groupe de bornes (3105) pour activer l'unité de commutation (3135), et
un sous-circuit de commande (3165) configuré pour commander l'écoulement du courant de commutation continu à travers l'unité de commutation (3135) en réponse à un courant alternatif s'écoulant à travers une borne du second groupe de bornes (3106), pour commander ainsi l'opération de commutation de l'unité de commutation (3135).

2. Circuit pilote selon la revendication à, dans lequel :
le sous-circuit de régulation de voltage du sous-circuit de sécurité (3115) camprend :
- un premier transformateur (3185) configuré pour isoler sur le plan galvanique le sous-circuit de régulation vis-à-vis du premier groupe de bornes (3105) et pour transférer le courant alternatif reçu via le premier groupe de bornes (3105),
- un premier redresseur (3180) configuré pour redresser le courant alternatif transféré reçu du premier transformateur (3185), et
- un régulateur de voltage (3170) configuré pour réguler le niveau de voltage du courant alternatif redressé depuis le premier redresseur (3180) pour fournir le courant de commutation continu au niveau de voltage prédéterminé pour faire fonctionner l'unité de commutation (3135) ; et
dans lequel le sous-circuit de commande (3165) du sous-circuit de sécurité (3115) comprend :
- un second transformateur (3190) configuré pour isoler sur le plan galvanique le sous-circuit de régulation vis-à-vis du second groupe de bornes (3110) et pour transférer le courant alternatif reçu via le second groupe de bornes (3110),
- un second redresseur (3175) configuré pour redresser le courant alternatif reçu du second transformateur (3190), et
- un sous-circuit de commande de commutation (3165) configuré pour commander l'écoulement du courant de commutation continu à travers l'unité de commutation (3135) sur la base d'une comparaison du niveau de voltage du courant alternatif redressé reçu depuis le second redresseur à un niveau de voltage seuil.

3. Circuit pilote selon la revendication 1, dans lequel :
le sous-circuit de régulation de voltage du sous-circuit de sécurité (5115) comprend :
- un premier transformateur (5185) configuré pour isoler sur le plan galvanique le sous-circuit de régulation de voltage vis-à-vis du premier groupe de bornes (5105) et pour réduire le niveau de voltage du courant alternatif reçu via le premier groupe de bornes (5105), et
- un premier redresseur (3180) configuré pour redresser le courant alternatif transféré reçu du premier transformateur (5185) et pour fournir le courant de commutation continu au niveau de voltage prédéterminé pour faire fonctionner l'unité de commutation (3135) ;
le sous-circuit de commande du sous-circuit de sécurité (5115) comprend :
- un second transformateur (3190) configuré pour isoler sur le plan galvanique le sous-circuit de régulation vis-à-vis du second groupe de bornes (5110) et pour transférer le courant alternatif reçu via le second groupe de bornes (5110),
- un second redresseur (3175) configuré pour redresser le courant alternatif reçu du second transformateur (3190), et
- un sous-circuit de commande de commutation (3165) configuré pour commander l'écoulement du courant de commutation continu à travers l'unité de commutation (3135) sur la base d'une comparaison du niveau de voltage du courant alternatif redressé reçu du second redresseur à un niveau de voltage seuil.

4. Circuit pilote selon la revendication 1, dans lequel :
le sous-circuit de régulation de voltage du sous-circuit de sécurité (7115) comprend :
- un premier redresseur (3180) configuré pour redresser le courant alternatif reçu via le premier groupe de bornes (7105), et
- un régulateur de voltage (7170) configuré pour réguler le niveau de voltage du courant alternatif redressé depuis le premier redresseur (3180) pour fournir le courant de commutation continu au niveau de voltage prédéterminé pour faire fonctionner l'unité de commutation (3135) ; et dans lequel
le sous-circuit de commande du sous-circuit de sécurité (7115) comprend :
- un second redresseur (7175) configuré pour redresser le courant alternatif reçu via le second groupe de bornes (7110) et pour transférer le courant alternatif reçu via le second groupe de bornes (7110),
- un second régulateur de voltage (7165) configuré pour réguler le niveau de voltage du courant alternatif redressé reçu du second redresseur (7175) pour fournir un courant de commande continu à un niveau de voltage convenable pour faire fonctionner un coupleur optique (7190), et
- un coupleur optique (7190) pour commander l'écoulement du courant de commutation continu à travers l'unité de commutation (3135) sur la base d'une comparaison du niveau de voltage du courant de commande continu reçu du second régulateur de voltage (7165) à un niveau de voltage seuil.

5. Circuit pilote selon la revendication 1, dans lequel :
le sous-circuit de régulation de voltage du sous-circuit de sécurité (8115) comprend :
- un premier circuit parallèle (7170) incluant une diode Zener et une capacité connectées en parallèle aux bornes du premier groupe de bornes, le premier circuit parallèle fournissant le courant de commutation continu au niveau de voltage prédéterminé pour faire fonctionner l'unité de commutation (3135) ; et
le sous-circuit de commande inclus dans le sous-circuit de sécurité (8115) comprend :
- un sous-circuit incluant un diviseur de voltage, une capacité et deux diodes connectées en série, connectées au second groupe de bornes (8110), et
- un coupleur optique (7190) pour commander l'écoulement du courant de commutation continu à travers l'unité de commutation sur la base d'une comparaison d'un niveau de voltage d'un courant continu transféré par le sous-circuit à un niveau de voltage seuil.

6. Circuit pilote pour piloter un réseau de LED selon l'une des revendications 1 à 5, dans lequel :
l'unité de commutation (3135) inclut un relais normalement ouvert avec un comportement de commutation monostable, et
le sous-circuit de sécurité est configuré pour générer un courant de commutation continu pour faire fonctionner le relais.

7. Circuit pilote selon l'une des revendications 1 à 6, dans lequel le circuit de ballast électronique (1200) fournit un courant alternatif de fonctionnement à un niveau de voltage prédéfini, et une impulsion d'allumage avec un niveau de pointe de voltage plus élevé que le niveau de voltage du courant alternatif de fonctionnement ;
dans lequel le convertisseur alternatif/continu inclut un redresseur (1120) configuré pour redresser l'impulsion d'allumage et/ou le courant alternatif de fonctionnement fourni depuis le circuit de ballast électronique (1200) pour délivrer un courant continu ;
dans lequel l'unité de stockage d'énergie (1125) est configurée pour stocker au moins partiellement l'énergie de l'impulsion d'allumage redressé et/ou du courant alternatif de fonctionnement redressé depuis le redresseur du convertisseur alternatif/continu ; et
dans lequel le sous-circuit d'alimentation de puissance inclut en outre :
- un convertisseur continu/continu (3130) configuré pour convertir l'énergie stockée de l'impulsion d'allumage et/ou le courant alternatif de fonctionnement stocké en un courant continu prédéterminé ou un niveau de voltage prédéterminé pour piloter le réseau de LED, ou
- un circuit série incluant un transistor et une capacité configurée pour au moins partiellement by-passer l'énergie de l'impulsion d'allumage et/ou l'énergie du courant alternatif de fonctionnement pour fournir une impulsion d'allumage réduite et/ou un courant alternatif de fonctionnement réduit au troisième redresseur, de sorte que le courant continu délivré par le sous-circuit d'alimentation de puissance ou le niveau de voltage de celui-ci correspond à un niveau de voltage respectif du courant continu prédéterminé pour piloter le réseau de LED ; et
dans lequel le circuit pilote inclut en outre un filtre (2145) pour préfiltrer l'impulsion d'allumage et/ou le courant alternatif de fonctionnement à alimenter au sous-circuit d'alimentation de puissance via au moins un groupe parmi le premier et le second groupe de bornes (3105; 3110).

8. Circuit pilote selon la revendication 7, dans lequel le convertisseur continu/continu (3130) inclus dans le sous-circuit d'alimentation de puissance comprend en outre :
un circuit de charge configuré pour simuler une charge d'un dispositif d'éclairage fluorescent sur la base d'une caractéristique voltage/courant du dispositif d'éclairage fluorescent ;
un contrôleur à modulation en largeur d'impulsion configuré pour délivrer un signal de rapport de service en accord avec un signal délivré par le circuit de charge indiquant la charge simulée, en accord avec un signal de comptage et en accord avec le niveau de courant continu délivré par le troisième redresseur et/ou le niveau de voltage de celui-ci ; et
un sous-circuit inverseur configuré pour convertir le courant continu reçu du redresseur et/ou le niveau de voltage celui-ci en dépendance du signal de rapport de service du contrôleur à modulation en largeur d'impulsion.

9. Circuit pilote selon la revendication 7 ou 8, dans lequel le sous-circuit d'alimentation de puissance comprend en outre un contrôleur configuré pour délivrer un signal déterminant une quantité d'énergie à by-passer par le transistor du circuit série en accord avec le niveau courant continu/voltage délivré par le sous-circuit d'alimentation de puissance pour commander le transistor du circuit série, et ajuster ainsi le courant qui s'écoule à travers le circuit pilote et/ou le niveau de voltage celui-ci pour simuler une charge d'un dispositif d'éclairage fluorescent.

10. Dispositif d'éclairage à diodes électroluminescentes (LED) recevant un courant alternatif d'un circuit de ballast électronique abrité de façon externe, le dispositif d'éclairage à LED comprenant :
le circuit pilote selon l'une des revendications 1 à 9 ; et
un réseau de LED connectées au sous-circuit d'alimentation de puissance du circuit pilote.

11. Dispositif d'éclairage à diodes électroluminescentes selon la revendication 10, comprenant en outre un circuit de ballast électronique pour remplacer le circuit de ballast électronique abrité de façon externe en cas de défaillance.
